# EUROPEAN PATENT SPECIFICATION

(11) **EP 2 096 790 B1**
(45) Date of publication and mention of the grant of the patent: **15.08.2012**
(21) Application number: 09153938.7
(22) Date of filing: 27.02.2009
(51) Int. Cl.: H04L 12/24, H04L 29/08

(54) **Management of communication functions of terminals**
Verwaltung von Kommunikationsfunktionen von Endgeräten
Gestion de fonctions de communication de terminaux

(30) Priority: 29.02.2008 JP 2008050382
(43) Date of publication of application: 02.09.2009
(73) Proprietor: NTT DOCOMO, INC., Chiyoda-ku Tokyo 100-6150 (JP)
(72) Inventor: Takahashi, Masaru, Toyko 100-6150 (JP); Sato, Atsushi, Tokyo 100-6150 (JP)
(74) Representative: Viering, Jentschura & Partner

(56) References cited:
- EP-A1- 1 750 469
- US-A1- 2005 166 266
- US-A1- 2007 206 756
- DEVICE MANAGEMENT WORKING GROUP: "OMA Device Management Tree and Description OMA-TS-DM-TND-V1 2-20050615-C" ANNOUNCEMENT OPEN MOBILE ALLIANCE, XX, XX, 15 June 2005 (2005-06-15), pages 1-48, XP002360958

## Description

### BACKGROUND OF THE INVENTION

### Field of the Invention

The present invention relates to a terminal function management server such as a DM (Device Management) server for managing communication functions retained by communication terminal devices, a communication system incorporating the terminal function management server, and a communication method therein.

### Related Background Art

Recently, DM (Device Management) to manage device information of communication terminal devices has been standardized by OMA (Open Mobile Alliance). There is a known system to provide, for example, a service like a remote diagnosis of a communication terminal device such as a cell phone, or like a remote DL (Down Load) through the use of a DM server to realize DM.
There is also a known system such as a content delivery system to deliver a ringing melody from a Web server to a communication terminal device in response to a request for the ringing melody from the communication terminal device (cf. Patent Document 1).
[Patent Document 1] Japanese Patent Application Laid-open No. 2005-157912.
Document EP 1 750 469 A1 discloses a mobile device capability management device for providing a mobile device profile update to a memory based on changes in the capability of a mobile device. The mobile device capability management device assesses the need to update a mobile device profile in a mobile device based on an assessment of whether the changes in capability of the mobile device would be of interest to an operator of a mobile communication network.

### SUMMARY OF THE INVENTION

With the conventional systems, however, even if there is a communication function modification of a communication terminal device used by another user and if there is no notification from the other user, it was difficult to know which communication function was downloaded in the communication terminal device of the other user or deleted from the communication terminal device. For this reason, it was difficult to preliminarily acquire and prepare the new communication function prior to a communication request from the other user, and if the other user should have deleted a certain communication function, a communication request using the deleted communication function would be rejected and this could impede efficient and smooth communication.

An object of the present invention is therefore to provide a terminal function management server as claimed in claim 1, a communication system as claimed in claim 6, and a communication method as claimed in claim 8 enabling efficient and smooth communication.

In order to solve the above-described problem, the present invention provides a terminal function management server which stores a communication function retained by a communication terminal device, out of a plurality of communication functions to enable a plurality of communications of different communication modes, the terminal function management server comprising: terminals function storing means to store one or more communication functions retained by each communication terminal device of the plurality of communication terminal devices, in correspondence to the communication terminal device; and processing determining means to receive communication function retention information transmitted from the communication terminal device and to modify the communication functions stored in the terminal function storing means, based on the communication function retention information, wherein the processing determining means, when modifying the communication functions stored in correspondence to a first communication terminal device out of the plurality of communication terminal devices, in the terminal function storing means, transmits function modification information indicating the modification of the communication functions of the first communication terminal device, to a second communication terminal device associated with the first communication terminal device.

The terminal function management server according to the present invention is configured as follows. The terminal function management server manages the communication functions retained by the respective communication terminal devices, and if there is a modification of the communication functions retained by a first communication terminal device, the communication functions stored in correspondence to the first communication terminal device in the terminal function storing means are modified based on the communication function retention information transmitted from the first communication terminal device. Furthermore, in accordance with the modification of the communication functions retained by the first communication terminal device, the processing determining means transmits the function modification information indicating the modification of the communication functions of the first communication terminal device, to a second communication terminal device associated with the first communication terminal device, whereby the second communication terminal device can acquire the function modification information of the first communication terminal device. In accordance with the content of the function modification of the first communications terminal device, a user of the second communication terminal device can optionally acquire a new communication function, for example, if the new communication function is added; or, if a communication function is deleted, the user can respond, for example, in such a manner that the user can avoid a communication through the use of the communication function deleted or the like. As a result, it becomes feasible to implement efficient and smooth communication.

Furthermore, preferably, the processing determining means specifies the second communication terminal device, based on identification information acquired from group information storing means storing the identification information of the second communication terminal device associated with the first terminal communication device, and transmits the function modification information to the second communication terminal device thus specified. This configuration permits the group information storing means to perform integrated management of the identification information of the second communication terminal device associated with each of the communication terminal devices, and thus facilitates modification and addition.

Furthermore, preferably, the communication function retention information contains identification information of the second communication terminal device associated with the first communication terminal device, and the processing determining means specifies the second communication terminal device, based on the identification information contained in the communication function retention information, and transmits the function modification information to the second communication terminal device thus specified. A modification of the communication functions stored in association with the first communication terminal device in the terminal function storing means is executed based on the communication function retention information from the first communication terminal device. Since the communication function retention information contains the identification information of the second communication terminal device, the identification information of the second communication terminal device can be acquired in accordance with the acquisition of the communication function retention information and thus the second communication terminal device can be specified from the identification information.

Furthermore, preferably, when the communication functions stored in the terminal function storing means are modified by adding a new communication function in correspondence to the first communication terminal device, the processing determining means determines whether the second communication terminal device retains the new communication function; the terminal function management server further comprises download instructing means to transmit download instruction information to instruct a download of the new communication function, to the second communication terminal device determined not to retain the new communication function, by the processing determining means. When the second communication terminal device without the new communication function acquires the download instruction information of the new communication function, it can readily acquire the new communication function corresponding to the communication function acquired by the first communication terminal device.

Furthermore, preferably, the terminal function storing means further stores a communication function which the communication terminal device can retain; when the communication functions stored in the terminal function storing means are modified by adding a new communication function in correspondence to the first communication terminal device, the processing determining means determines whether the second communication terminal device can retain the new communication function; the terminal function management server further comprises download instructing means to transmit download instruction information to instruct a download of the new communication function, to the second communication terminal device determined to be able to retain the new communication function, by the processing determining means. If the second communication terminal device cannot retain the new communication function, it is substantially worthless to transmit the download instruction information. Since the download instruction information is transmitted only if the second communication terminal device can retain the new communication function, the second communication terminal device can efficiently acquire the new communication function.

The present invention also provides a communication system comprising a terminal function management server which stores a communication function retained by a communication terminal device, out of a plurality of communication functions to enable a plurality of communications of different communication modes, wherein the terminal function management server comprises: terminal function storing means to store one or more communication functions retained by each communication terminal device of the plurality of communication terminal devices, in correspondence to the communication terminal device; and processing determining means to receive communication function retention information transmitted from the communication terminal device and to modify the communication functions stored in the terminal function storing means, based on the communication function retention information, wherein the processing determining means, when modifying the communication functions stored in correspondence to a first communication terminal device out of the plurality of communication terminal devices, in the terminal function storing means, transmits function modification information indicating the modification of the communication functions of the first communication terminal device, to a second communication terminal device associated with the first communication terminals device.

According to the present invention, the function modification information indicating the modification of the communication functions of the first communication terminal device is transmitted to the second communication terminal device associated with the first communication terminal device, in accordance with the modification of the communication functions retained by the first communication terminal device, whereby the second communication terminal device can acquire the function modification information of the first communication terminal device. The user of the second communication terminal device can respond according to the content of the function modification of the first communication terminal device. As a result, it becomes feasible to implement efficient and smooth communication.

Furthermore, preferably, the communication system of the present invention further comprises a group information management server having group information storing means to store identification information of the second communication terminal device associated with the first communication terminal device, and group information transmitting/receiving means to transmit the identification information of the second communication terminal device to the terminal function management server, according to an inquiry from the terminal function management server; the processing determining means of the terminal function management server specifies the second communication terminal device, based on the identification information received from the group information management server, and transmits the function modification information to the second communication terminal device thus specified. This permits the group information management server to perform integrated management of the identification information of the second communication terminal device associated with each of the communication terminal devices, and thus facilitates modification and addition.

A communication method according to the present invention is a communication method executed in a communication system comprising a terminal function management server which stores a communication function retained by a communication terminal device, out of a plurality of communication functions to enable a plurality of communications of different communication modes, the communication method comprising: a terminal function storing step of storing one or more communication functions retained by each communication terminal device of a plurality of communication terminal devices, in correspondence to the communication terminal device; a terminal function modifying step of receiving communication function retention information transmitted from a first communication terminal device out of the plurality of communication terminal devices, and modifying the communication functions stored in correspondence to the first communication terminal device in terminal function storing means, based on the communication function retention information; and a function modification notifying step of transmitting function modification information indicating the modification of the communication functions of the first communication terminal device to the second communication terminal device associated with the first communication terminal device.

According to the present invention, the function modification information indicating the modification of the communication functions of the first communication terminal device is transmitted to the second communication terminal device associated with the first communication terminal device, in accordance with the modification of the communication functions retained by the first communication terminal device, whereby the second communication terminal device can acquire the function modification information of the first communication terminal device. The user of the second communication terminal device can respond according to the content of the function modification of the first communication terminal device. As a result, it becomes feasible to implement efficient and smooth communication.

The present invention enables efficient and smooth communication.

### BRIEF DESCRIPTION OF THE DRAWINGS

Fig. 1 is a drawing showing a functional configuration of a communication system according to a first embodiment of the present invention.
Fig. 2 is a drawing showing an example of a terminal state table stored in a terminal state storage unit according to the first embodiment.
Fig. 3 is a drawing showing an example of a group list table stored in a group list storage unit according to the first embodiment.
Fig. 4 is a drawing showing a hardware configuration of a terminal profile management server.
Fig. 5 is a drawing showing a hardware configuration of a first mobile terminal.
Fig. 6 is a sequence chart showing an operation sequence of the communication system according to the first embodiment.
Fig. 7 is a flowchart showing an operation procedure of a function modification information notifying process executed in the terminal profile management server according to the first embodiment.
Fig. 8 is a drawing showing an example of the terminal state table after updated.
Fig. 9 is a drawing showing an example of a group list table stored in a group list storage unit according to a second embodiment.
Fig. 10 is a sequence chart showing an operation sequence of a communication system according to the second embodiment.
Fig. 11 is a flowchart showing an operation procedure of a function modification information notifying process executed in a terminal profile management server according to the second embodiment.
Fig. 12 is a drawing showing a functional configuration of a communication system according to a third embodiment of the present invention.
Fig. 13 is a sequence chart showing an operation sequence of the communication system according to the third embodiment.
Fig. 14 is a flowchart showing an operation procedure of a function modification information notifying process executed in a terminal profile management server according to the third embodiment.

### DESCRIPTION OF THE PREFERRED EMBODIMENTS

The preferred embodiments of the communication system according to the present invention will be described below with reference to the drawings.

### (First Embodiment)

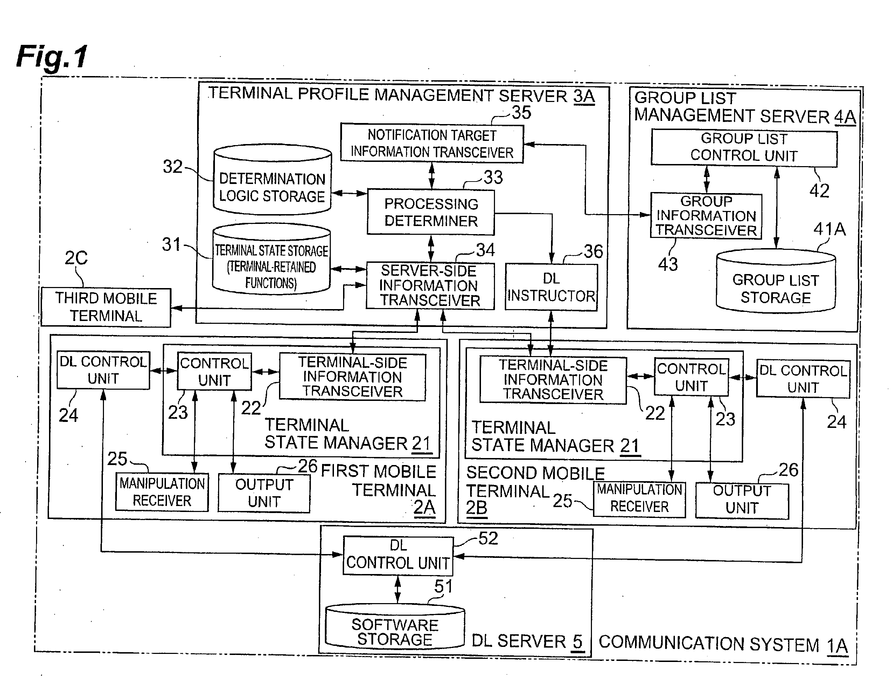

Fig. 1 is a drawing showing a functional configuration of the communication system according to the first embodiment. The communication system 1A is connected to a plurality of communication terminal devices via communication networks such as a fixed telephone network and a mobile telephone network, and makes connection of a communication line to a destination communication terminal device in accordance with a request for a communication such as a speech call or a packet communication from an originating communication terminal device. Each communication terminal device executes a communication control based on a software application retained thereby, to realize a predetermined communication function. Therefore, the communication function retained by each communication terminal device is determined based on the software application retained by the communication terminal device. When a communication terminal device retains a plurality of communication functions, it is able to use any one of the communication functions and thereby to perform a plurality of communications of different communication modes. If an originating communication terminal device and a destination communication terminal device both retain a predetermined communication function, it is feasible to perform a communication using the predetermined communication function between the two communication terminal devices. The communication functions include terminal functions such as the pictograph function and the PoC function, and communications of different communication modes are also implemented, for example, depending upon old and new versions in each function. In the description hereinafter, mobile terminals 2A, 2B, and 2C such as cell phones or PHSs are exemplified as communication terminal devices.

The communication system 1A has a terminal profile management server (terminal function management server) 3A connected so as to enable transmission/reception of signals among first mobile terminal 2A, second mobile terminal 2B, and third mobile terminal 2C via an exchange server (not shown) or the like, and a group list management server (group information storing means) 4A connected so as to enable transmission/reception of signals to or from the terminal profile management server 3A. Furthermore, the communication system 1A has a DL (Down Load) server (download server) 5 which transmits a predetermined software application, i.e., data for allowing a terminal to retain a predetermined communication function, in response to a download request from the mobile terminal 2A, 2B, or 2C to the mobile terminal 2A, 2B, or 2C having sent the download request.

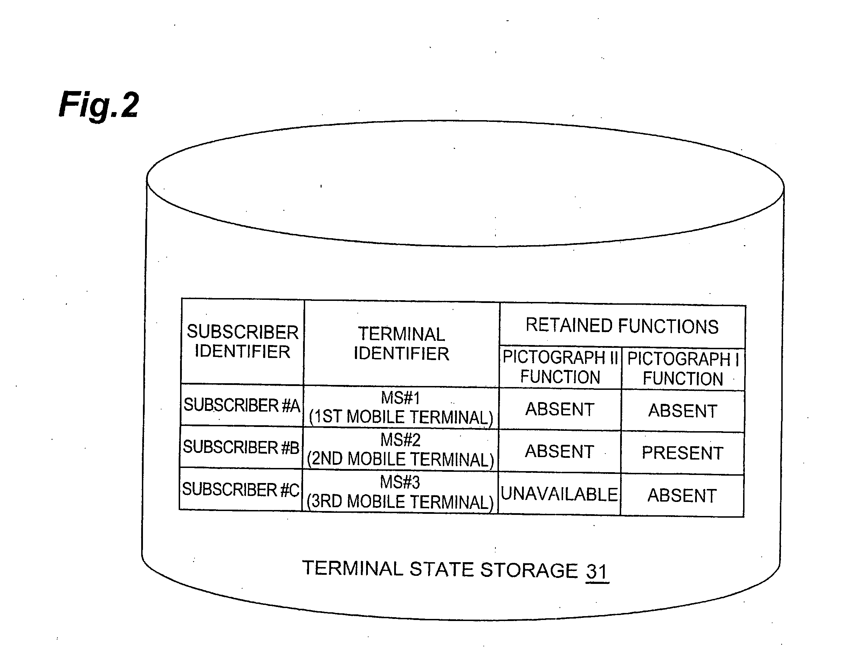

The terminal profile management server 3A has a terminal state storage unit (terminal function storing means) 31 storing retained functions and retainable functions of the first to third mobile terminals 2A, 2B, and 2C. As shown in Fig. 2, the terminal state storage unit 31 stores a terminal state table in which the retained functions and retainable functions are set in correspondence to subscriber identifiers being identification information of respective users using the first to third mobile terminals 2A, 2B, and 2C and terminal identifiers being individual identification information of the first to third mobile terminals 2A, 2B, and 2C. In the terminal state table, data indicating "present" is set if a mobile terminal can retain a predetermined communication function and actually retains it; data indicating "absent" is set if a mobile terminal can retain a predetermined communication function but does not retain it; data indicating "unavailable" is set if a mobile terminal cannot be loaded with or cannot retain a predetermined communication function in terms of its performance as hardware.

In the state shown in Fig. 2, for example, the subscriber identifier of the user of the mobile terminal 2A is "subscriber #A" and the terminal identifier of the mobile terminal 2A is "MS#1." In correspondence to the subscriber identifier and the terminal identifier of mobile terminal 2A, "absent," not "unavailable," is set in pictograph I function and pictograph II function. Therefore, it is indicated that the mobile terminal 2A can retain the pictograph I function and pictograph II function but does not retain them. In addition, the subscriber identifier of the user of the mobile terminal 2B is "subscriber #B" and the terminal identifier of mobile terminal 2B is "MS#2." In correspondence to the subscriber identifier and terminal identifier of the mobile terminal 2B, "absent," not "unavailable," is set in the pictograph II function and "present" is set in the pictograph I function. Therefore, it is indicated that the retained function of mobile terminal 2B is only the pictograph I function and it can retain the pictograph II function. Furthermore, the subscriber identifier of the mobile terminal 2C is "subscriber #C" and the terminal identifier is "MS#3." In correspondence to the subscriber identifier and terminal identifier of the third mobile terminal 2C, "unavailable" is set in the pictograph II function and "absent" is set in the pictograph I function. Therefore, it is indicated that the mobile terminal 2C cannot retain the pictograph II function and can retain the pictograph I function though it does not retain it.

As shown in Fig. 1, the terminal profile management server 3A has a determination logic storage unit 32, a processing determining unit (determining means) 33, a server-side information transceiver unit (terminal management information transmitting/receiving means) 34, a notification target information transceiver unit 35, and a DL (Down Load) instructing unit 36.

The determination logic storage unit 32 stores a program showing a determination logic executed by the processing determining unit 33. The processing determining unit (determining means) 33 retrieves the program stored in the determination logic storage unit 32 and executes the following processing in accordance with the program.

The processing determining unit (determining means) 33 receives terminal information (communication function retention information) on a regular or optional basis from each mobile terminal 2A, 2B, or 2C via the server-side information transceiver unit 34 and, based on the received terminal information, it generates a new record in the terminal state table of the terminal state storage unit 31 or updates the record as to the retained functions and retainable communication functions in the respective mobile terminals 2A, 2B, and 2C. The processing determining unit 33 updates the record of the terminal state table to modify the retained functions of the respective mobile terminals 2A, 2B, and 2C stored in the terminal state storage unit 31.

The terminal information contains a service identifier in addition to the subscriber identifier and terminal identifier. The service identifier is information to specify a communication function retained by each mobile terminal 2A, 2B, or 2C and, for example, the terminal information transmitted from the mobile terminal 2A contains all service identifiers corresponding to communication functions retained by the mobile terminal 2A. The service identifier in the terminal information may be only a difference from that in preceding transmission; e.g., if a new communication function is added, the terminal information may contain only a service identifier corresponding to the new communication function.

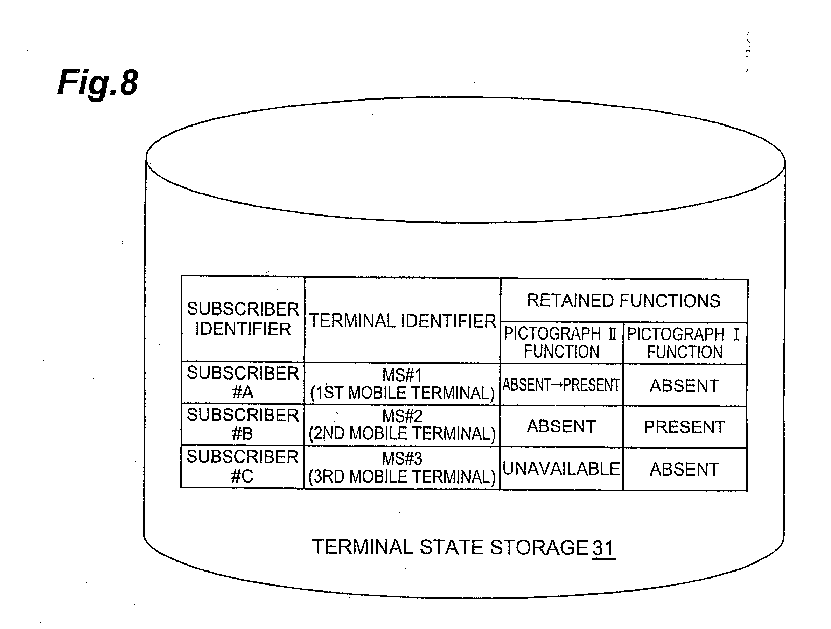

For example, in a case where the processing determining unit 33 receives the terminal information containing neither of the service identifiers of the pictograph I function and pictograph II function from the mobile terminal 2A, it generates such a record that the data indicating "absent" is set in both of the pictograph I function and pictograph II function (cf. Fig. 2). Thereafter, where the processing determining unit 33 receives the terminal information containing the service identifier of the pictograph II function from the mobile terminal 2A, it updates the record so that the data indicating "present" is set in the pictograph II function (cf. Fig. 8). When there is a difference of service identifier between the terminal information received last time and the terminal information received this time as described above, the processing determining unit 33 determines that there was a modification of the communication functions in the mobile terminal 2A, 2B, or 2C with the difference and executes an update of the record on the basis of the service identifiers contained in the terminal information received this time.

Particularly, where the latest terminal information contains a new service identifier absent in the preceding terminal information, the processing determining unit 33 determines that a new communication function corresponding to the new service identifier was added. Furthermore, the processing determining unit 33 updates the record so that the data indicating "present" is set in the new communication function, in correspondence to the subscriber identifier and terminal identifier of the mobile terminal 2A, 2B, or 2C in which the new communication function was added (cf. Fig. 8), The addition of the new communication function does not include only the simple addition without deletion of any other communication function, but also includes replacement by an upgrade of a communication function or the like. The modification of communication functions is not limited to only these additions of the communication function but also includes deletion of a communication function previously retained.

Furthermore, the processing determining unit 33 sends an inquiry through the notification target information transceiver unit 35 to the group list management server 4A to specify a notification target of function modification information, e.g., the second mobile terminal 2B and third mobile terminal 2C. Then the processing determining unit 33 refers to the terminal state table stored in the terminal state storage unit 31 to determine whether the second mobile terminal 2B and the third mobile terminal 2C as notification targets can be loaded with the new communication function of the first mobile terminal 2A, e.g., the pictograph II function, i.e., to determine whether they can retain the new communication function, and further to determine whether the second mobile terminal 2B determined as one capable of retaining the new communication function has already been loaded with the pictograph II function, i.e., whether the second mobile terminal 2B retains the pictograph II function or not.

Furthermore, the processing determining unit 33 transmits the function modification information through the server-side information transceiver unit 34 to the second mobile terminal 2B and the third mobile terminal 2C being the notification targets. Namely, the processing determining unit 33 notifies the server-side information transceiver unit 34 of the subscriber identifiers and terminal identifiers of the second mobile terminal 2B and the third mobile terminal 2C being the notification targets, and transmits the function modification information via the server-side information transceiver unit 34 thereto.

Furthermore, the processing determining unit 33 notifies the DL instructing unit 36 of the subscriber identifier and terminal identifier of the second mobile terminal 2B which can retain the pictograph II function and which does not retain it, out of the second mobile terminal 2B and the third mobile terminal 2C being the notification targets, to transmit DL instruction information (download instruction information) to the second mobile terminal 2B.

Furthermore, the processing determining unit 33 receives a terminal information notification policy (associated terminal information) transmitted from each mobile terminal 2A, 2B, or 2C, from the server-side information transceiver unit 34 and notifies the notification target information transceiver unit 35 of it. The terminal information notification policy according to the present embodiment contains the subscriber identifier, terminal identifier, and notification target subscriber identifier of each mobile terminal 2A, 2B, or 2C being the transmitter of the terminal information notification policy.

The server-side information transceiver unit 34 receives the terminal information transmitted from each mobile terminal 2A, 2B, or 2C and notifies the processing determining unit 33 of it. Furthermore, the server-side information transceiver unit 34 receives the terminal information notification policy transmitted from each mobile terminal 2A, 2B, or 2C and notifies the processing determining unit 33 of it.

Furthermore, the server-side information transceiver unit 34, when receiving the subscriber identifier and terminal identifier of the transmission target of the communication modification information from the processing determining unit 33, inquires of an unrepresented location information management server as to locations of the mobile terminals 2B and 2C as the notification targets and transmits the function modification information indicating the modification of the communication functions of the first mobile terminal 2A to the mobile terminal 2B and/or 2C the location of which has been confirmed. The function modification information contains the subscriber identifier and terminal identifier of the mobile terminal 2A and the service identifier of the new communication function acquired by the mobile terminal 2A. Furthermore, the function modification information contains a terminal state identifier indicating a terminal state of each mobile terminal 2B or 2C of the notification target, e.g., an identifier indicating whether the mobile terminal can retain the new function of the first mobile terminal 2A, or whether the mobile terminal has been loaded therewith.

The DL instructing unit 36 inquires of the unrepresented location information management server, based on the subscriber identifier and terminal identifier notified of by the processing determining unit 33, to confirm the location of the mobile terminal 2B as a download instruction target, and transmits the DL instruction information of the new communication function, e.g., the pictograph II function to the mobile terminal 2B the location of which has been confirmed. The DL instruction information contains a servile identifier about the new communication function for instruction of a download of the new communication function.

The third mobile terminal 2C, which cannot retain the added function of the first mobile terminal 2A, receives the function modification information according to a first pattern and its output unit such as a display outputs a message, e.g., "Subscriber A added Pictograph II function. Unfortunately, Pictograph II function is unavailable for your cell phone. You are recommended to replace your phone with another." to inform the user of the fact. The second mobile terminal 2B, which can retain the added function of the first mobile terminal 2A and which does not retain the added function, receives both of the function modification information and the DL instruction information according to a second pattern and its output unit 26 outputs a message to urge a download of the pictograph II function, e.g., "Subscriber A added Pictograph II function. Do you want to add Pictograph II function, too?" to inform the user of the fact. A communication terminal device which already retains the added function of the first mobile terminal 2A, receives only the function modification information according to a third pattern and its output unit outputs a message, e.g., "Subscriber A added Pictograph II function. You are now ready for communication with Subscriber A through Pictograph II function."

The notification target information transceiver unit 35 receives the terminal information notification policy from the processing determining unit 33 and transmits the terminal information notification policy to the group list management server 4A. Furthermore, the notification target information transceiver unit 35 receives an inquiry about a notification target from the processing determining unit 33 and transmits information related to the inquiry, i.e., notification target search request information containing the subscriber identifier of the first mobile terminal 2A subjected to the function modification, to the group list management server 4A. Furthermore, the notification target information transceiver unit 35 receives notification target search response information from the group list management server 4A and notifies the processing determining unit 33 of the notification target search response information. The notification target search response information contains the subscriber identifiers and terminal identifiers of the mobile terminal 2B and the mobile terminal 2C of the notification targets.

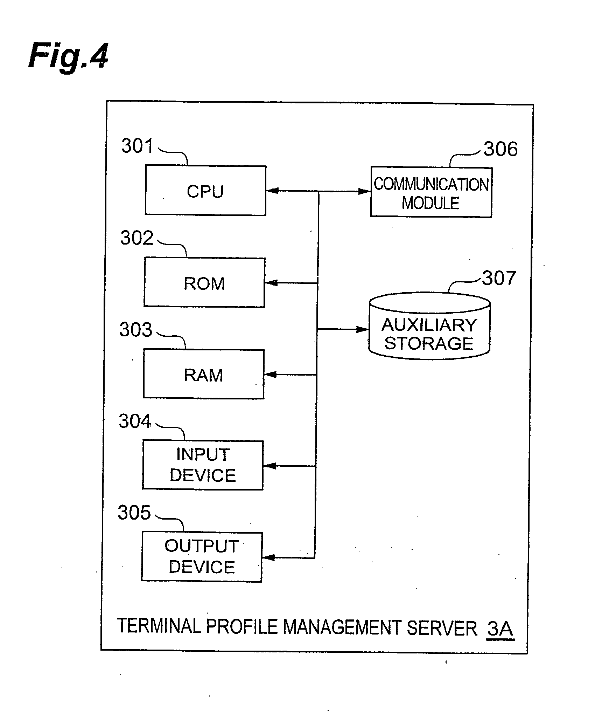

Fig. 4 is a drawing showing a hardware configuration of the terminal profile management server 3A. As shown in Fig. 4, the terminal profile management server 3A is physically constructed with a CPU 301, a ROM 302, a RAM 303, an input device 304, an output device 305, a communication module 306 being a data transmitting/receiving device, an auxiliary storage device 307, and so on. Each function of the terminal profile management server 3A is implemented by retrieving a predetermined software application onto the hardware device such as the CPU 301 and RAM 303, operating the communication module 306, input device 304, and output device 305 under control of the CPU 301, and reading and writing data from and into the RAM 303. The below-described group list management server 4A and DL server 5 also have elements similar to those in the above-described hardware configuration and each of functions described below is implemented by these elements.

The group list management server 4A has a group list storage unit 41 A, a group list control unit 42, and a group information transceiver unit 43. The group information transceiver unit 43 receives the terminal information notification policy and the notification target search request information from the notification target information transceiver unit 35 of the terminal profile management server 3A and notifies the group list control unit 42 of the received information. It also receives the notification target search response information from the group list control unit 42 and transmits it to the notification target information transceiver unit 35.

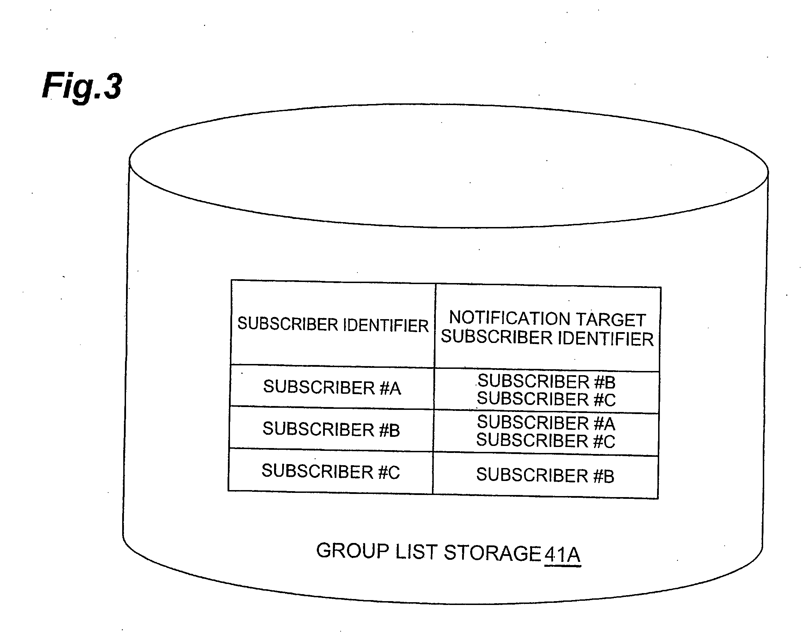

The group list storage unit 41A stores a group list table and in the group list table, a notification target subscriber identifier is stored in association with each subscriber identifier. The notification target subscriber identifier is information to specify a notification target to be notified of the function modification information, with modification of the communication functions in the mobile terminals 2A, 2B, and 2C. For example, as shown in Fig. 3, notification target subscriber identifiers "subscriber #B" and "subscriber #C" are stored in association with subscriber identifier "subscriber #A" of user A. It indicates that in the case where there is a modification of the retained functions of the first mobile terminal 2A used by user A, the notification targets of the function modification information are the second mobile terminal 2B and the third mobile terminal 2C used by user B or by user C. Similarly, "subscriber #A" and "subscriber #C" are stored in association with subscriber identifier "subscriber #B," which indicates that the function modification information is to be notified to user A or to user C with modification of the communication functions of the second mobile terminal 2A of user B; "subscriber #B" is stored in association with subscriber identifier "subscriber #C," which indicates that the function modification information is to be notified to user B with modification of the communication functions of the third mobile terminal 2C of user C.

The group list control unit 42 receives the terminal information notification policy through the group information transceiver unit 43 and generates a new record in the group list table stored in the group list storage unit 41A or updates the group list table, based on the terminal information notification policy. For example, the terminal information notification policy from the first mobile terminal 2A contains the subscriber identifier "subscriber #A." In a case where the terminal information notification policy contains "subscriber #B" and "subscriber #C" as notification target subscriber identifiers, "subscriber #B" and "subscriber #C" are associated as notification target subscriber identifiers of "subscriber #A" to generate a new record or update the old record.

The group list control unit 42, when receiving the notification target search request information through the group information transceiver unit 43, sets a subscriber identifier contained in the notification target search request information, to a search key and refers to the group list table to extract a notification target subscriber identifier, based thereon. Furthermore, the group list control unit 42 transmits the notification target search response information containing the extracted notification target subscriber identifier, through the group information transceiver unit 43 to the notification target information transceiver unit 35 of the terminal profile management server 3A.

The group information transceiver unit 43 receives the terminal information notification policy and the notification target search request information transmitted from the terminal profile management server 3A and notifies the group list control unit 42 of the received information. Furthermore, the group information transceiver unit 43 transmits the notification target search response information notifies of by the group list control unit 42, to the terminal profile management server 3A.

The first mobile terminal 2A has a terminal state management unit 21, a DL control unit 24, a manipulation receiving unit 25, and an output unit 26.

The terminal state management unit 21 has a terminal-side information transceiver unit 22 and a control unit 23. The terminal-side information transceiver unit 22 transmits the terminal information and the terminal information notification policy to the terminal profile management server 3A. Furthermore, the terminal-side information transceiver unit 22 receives the function modification information transmitted from the terminal profile management server 3A. The control unit 23 executes control of operations of the terminal-side information transceiver unit 22, DL control unit 24, and output unit 26, based on a user's input manipulation received by the manipulation receiving unit 25. Particularly, the control unit 23 specifies a user as a notification target of the function modification information, based on the input manipulation, and generates the terminal information notification policy containing the subscriber identifier of each notification target user. Furthermore, the control unit 23 makes the output unit 26 output a function modification notification message, based on the function modification information received by the terminal-side information transceiver unit 22.

The DL server 5 has a software storage unit 51 storing program data about a predetermined communication function, and a DL control unit 52 to transmit program data according to a download request from each mobile terminal 2A, 2B, or 2C in response to the mobile terminal 2A, 2B, or 2C. The download request contains a service identifier and the software storage unit 51 stores the program data about the communication function in correspondence to each service identifier. When the DL control unit 52 receives, for example, a download request for the pictograph II function from the first mobile terminal 2A, it extracts the program data according to the service identifier contained in the download request, from the software storage unit 51 and transmits the extracted program data to the first mobile terminal 2A, in order to make the first mobile terminal 2A retain the pictograph II function.

The manipulation receiving unit 23 receives a manipulation input given by the user and, for example, when receiving a user's manipulation for a download of a predetermined communication function, the manipulation receiving unit 25 notifies the control unit 23 of predetermined information for executing the download. The output unit 26 executes an operation process according to an instruction from the control unit 23 to output a predetermined message. The DL control unit 24 executes an operation process according to an instruction from the control unit 23 to transmit the DL instruction information containing the service identifier of the predetermined communication function, to the DL server 5. The second and third mobile terminals 2B and 2C have the functional configuration similar to that of the first mobile terminal 2A.

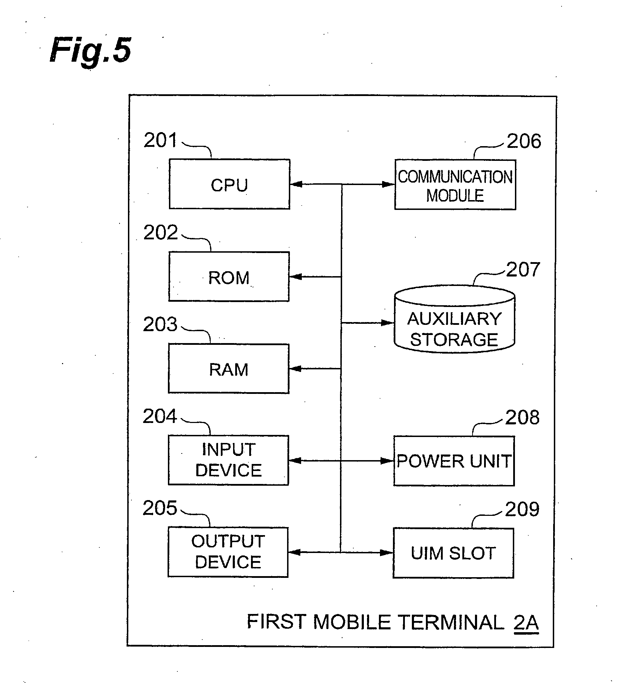

Fig. 5 is a drawing showing a hardware configuration of the first mobile terminal 2A. As shown in Fig. 5, the mobile terminal 2A is physically constructed with a CPU 201, a ROM 202, a RAM 203, an input device 204, an output device 205, a communication module 206 being a data transmitting/receiving device, an auxiliary storage device 207, a UIM slot 208, and a power unit 209. Each of the functions of the mobile terminal 2A is implemented by retrieving a predetermine software application onto the hardware such as the CPU 201 and RAM 203, operating the communication module 206, input device 204, and output device 205 under control of the CPU 201, and reading and writing data from and into the RAM 203. The second and third mobile terminals 2B and 2C have a hardware configuration similar to that of the first mobile terminal 2A and each of the functions of the second and third mobile terminals 2B and 2C is implemented by these elements.

### (Communication Method)

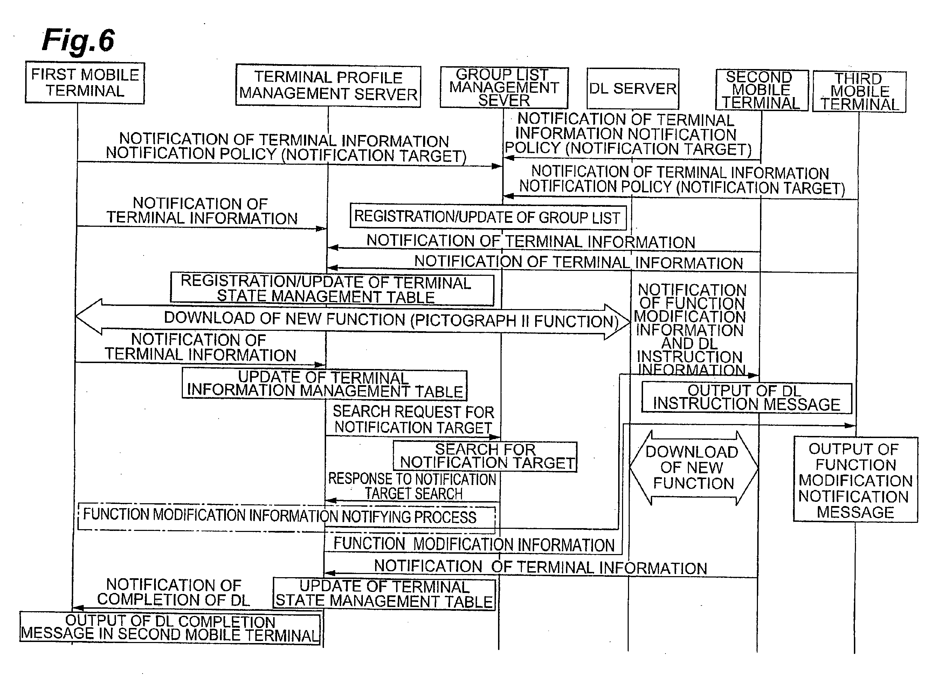

Next, a communication method executed in the communication system 1A will be described. Fig. 6 is a sequence chart showing an operation sequence executed in the communication system 1A. In the description below, the operation sequence will be specifically explained with an example wherein there is a modification of the retained functions of the first mobile terminal 2A and wherein the function modification information is notified to the second and third mobile terminals 2B and 2C.

As shown in Fig. 6, the first to third mobile terminals 2A, 2B, and 2C each notify the group list management server 4A of the terminal information notification policy, based on their respective user's manipulations, through the terminal profile management server 3A. The terminal information notification policy contains one or more notification target subscriber identifiers. For example, the terminal information notification policy from the first mobile terminal 2A contains "subscriber #B" and "subscriber #C" corresponding to user B and user C as notification target subscriber identifiers. The group list control unit 42 of the group list management server 4A, receiving the terminal information notification policy, updates the group list table stored in the group list storage unit 41 A.

The first to third mobile terminal 2A, 2B, and 2C each notify the terminal profile management server 3A of the terminal information at a predetermined period or optional timing. The terminal information contains a service identifier indicating a retained function, in addition to the subscriber identifier and the terminal identifier. In the terminal profile management server 3A receiving the terminal information, the processing determining unit 33 executes registration and update of the terminal state management table stored in the terminal state storage unit 31 (terminal function storing step and terminal function modifying step).

For example, the first mobile terminal 2A requests the DL server 5 to send data for retention of the pictograph II function as a new function and, after completion of a download about the pictograph II function, it notifies the terminal profile management server 3A of the terminal information containing the service identifier of the pictograph II function. In the terminal state management table shown in Fig. 2, "absent" has been set in both of the pictograph II function and the pictograph I function as the retained functions of the first mobile terminal 2A. In this case, where the service identifier of the pictograph II functions is contained in the terminal information from the first mobile terminal 2A, the processing determining unit 33 executes an update process of modifying the retained functions of the first mobile terminal 2A to the pictograph II function "present" (cf. Fig. 8).

Next, the processing determining unit 33 of the terminal profile management server 3A instructs the notification target information transceiver unit 35 to transmit the notification target search request to the group list management server 4A. The group list control unit 42 of the group list management server 4A, receiving the notification target search request, searches the group list table of the group list storage unit 41A to extract the notification target subscriber identifier corresponding to the first mobile terminal 2A, or user A, and then transmits the notification target search response containing the extracted notification target subscriber identifier, to the terminal profile management server 3A.

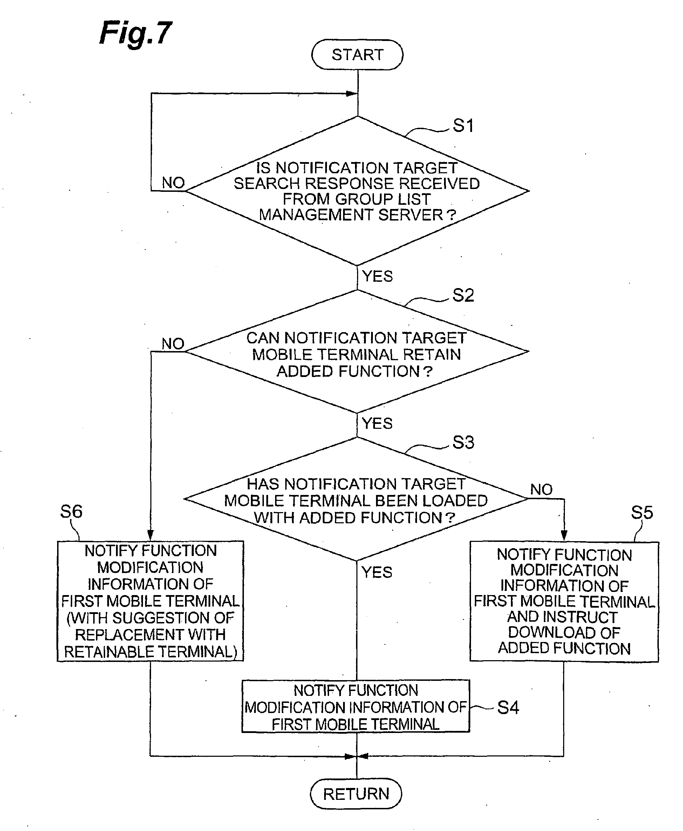

The following will describe a function modification information notifying process executed in the terminal profile management server 3A receiving the notification target search response. Fig. 7 is a flowchart showing an operation procedure of the function modification information notifying process executed in the terminal profile management server 3A.

The processing determining unit 33 of the terminal profile management server 3A notifies the group list management server 4A of the notification target search request and thereafter stands by to receive the notification target search response (step S1). When the processing determining unit 33 receives the notification target search response, it determines whether the second and third mobile terminals 2B, 2C of notification targets can retain the pictograph II function being the added function (step S2). When the processing determining unit 33 determines that the third mobile terminal 2C cannot retain the pictograph II function, it notifies the third mobile terminal 2C of the function modification information according to the first pattern (step S6). The function modification information in this case is information for letting the third mobile terminal 2C output a message to suggest replacement of the terminal with another terminal capable of retaining the pictograph II function. For example, in the case of the third mobile terminal 2C, the function modification information is information for letting the second mobile terminal 2B output the function modification notification message of "Subscriber A added Pictograph II function. Unfortunately, Pictograph II function is unavailable for your cell phone. You are recommended to replace your phone with another."

When the processing determining unit 33 determines that the second mobile terminal 2B can retain the pictograph II function, it determines whether the second mobile terminal 2B has already been loaded with the pictograph II function, i.e., whether it already retains the function (step S4). When the processing determining unit 33 determines that the second mobile terminal 2B is not loaded with the pictograph II function, it transmits the function modification information according to the second pattern and the download instruction information of the added function to the second mobile terminal 2B. The function modification information according to the second pattern is, for example, information for letting the second mobile terminal 2B output the function modification notification message of "Subscriber A added Pictograph II function." The download instruction information is, for example, information for letting the second mobile terminal 2B output the DL instruction message of "Do you want to add Pictograph II function, too?"

When there is a communication terminal device determined to be able to retain the pictograph II function newly retained by the first mobile terminal 2A and to be already loaded with the pictograph II function, among the communication terminal devices of notification targets, the processing determining unit 33 transmits the function modification information according to the third pattern to the communication terminal device. The function modification information according to the third pattern is, for example, information for letting the second mobile terminal 2B output the function modification notification message of "Subscriber A added Pictograph II function. You are now ready for communication with Subscriber A through Pictograph II function." The step S4, step S5, and step S6 correspond to the function modification notifying step.

As shown in Fig. 6, the third mobile terminal 2C, receiving the function modification information, outputs the function modification notification message from the output unit. The second mobile terminal 2B, receiving the function modification information and DL instruction information, outputs the function modification notification message and the DL instruction message from the output unit 26.

The user of the second mobile terminal 2B gives, for example, a manipulation input to download the pictograph II function being the new function. Then the DL control unit 24 performs the download request to the DL server 5 to acquire data for retention of the pictograph II function from the DL server 5. After the download of the pictograph II function, the second mobile terminal 2B notifies the terminal profile management server 3A of the terminal information containing the service identifier of the pictograph II function. The terminal profile management server 3A, receiving the terminal information containing the service identifier of the pictograph II function from the second mobile terminal 2B, updates the terminal state management table stored in the terminal state storage unit 31. furthermore, the terminal profile management server 3A transmits a download completion notification of the pictograph II function in the second mobile terminal 2B, to the first mobile terminal 2A. The first mobile terminal 2A outputs a download completion message of the second mobile terminal 2B. The download completion message is, for example, a message of "Subscriber B completed download of Pictograph II function. You are now ready for communication with Subscriber B through Pictograph II function."

In the present embodiment, the terminal profile management server 3A manages the communication functions retained by the respective mobile terminals 2A-2C and if there is a modification of the communication functions retained by the first mobile terminal 2A, the retained functions stored in correspondence to the subscriber identifier "subscriber #A" of the first mobile terminal 2A in the terminal state storage unit 31 are modified based on the terminal information transmitted from the first mobile terminal 2A. Furthermore, in accordance with the modification of the communication functions retained by the first mobile terminal 2A, the processing determining unit 33 transmits the function modification information indicating the modification of the communication functions of the first mobile terminal 2A, to the second and third mobile terminals 2B, 2C associated with the first mobile terminal 2A. The second and third mobile terminals 2B, 2C, receiving the function modification information of the first mobile terminal 2A, outputs a predetermined message. The users of the second and third mobile terminals 2B, 2C can optionally acquire the newly added communication function, for example, by downloading the pictograph II function from the DL server 5, in accordance with the content of the function modification of the first mobile terminal 2A. As a result, it becomes feasible to perform efficient and smooth communication.

Furthermore, since the communication subscriber identifiers of the other mobile terminals associated with each of the first to third mobile terminals 2A-2C are stored in the group list storage unit 41 of the group list management server 4A, the communication subscriber identifiers of the other mobile terminals associated with each of the first to third mobile terminals 2A-2C can be managed in an integrated fashion and it facilitates modification and addition.

The terminal state storage unit 31 stores the communication functions which the first to third mobile terminals 2A-2C can retain, by setting "present" if it is retained and "absent" if it is not retained, and stores unavailable communication functions by setting "unavailable" therefor. When the first mobile terminal 2A comes to retain a new communication function, the processing determining unit 33 determines whether the associated terminal can retain the new communication function, for each of the second and third mobile terminals 2B, 2C associated with the first mobile terminal 2A. When the associated terminal can retain the new communication function, the processing determining unit 33 transmits the DL instruction information of the new communication function to the retainable mobile terminal. If a mobile terminal associated with the first mobile terminal 2A cannot retain the new communication function, it is substantially worthless to transmit the DL instruction information. Since the DL instruction information is transmitted only in the retainable case, the mobile terminal receiving the DL instruction information can efficiently acquire the new communication function.

Furthermore, the processing determining unit 33 performs the determination on whether the second mobile terminal 2B capable of retaining the new communication function already retains the new communication function, and transmits the DL instruction information of the new communication function to the second mobile terminal 2B only in the unretained case. Since the second mobile terminal 2B acquires the DL instruction information of the new communication function not retained thereby, it becomes easier for the second mobile terminal 2B to acquire the new communication function corresponding to the added function in the first mobile terminal 2A. Particularly, the processing determining unit 33 determines whether the mobile terminal already retains the new communication function, only when the mobile terminal 2B or 2C associated with the first mobile terminal 2A can retain the new communication function. As a result, the DL instruction information is not transmitted to the mobile terminal incapable of retaining the new communication function even if the mobile terminal does not retain the new communication function. This makes it feasible to effectively transmit the DL instruction information. In the present embodiment the processing determining unit 33 determines whether the associated terminal already retains the new communication function, after execution of the determination on whether the associated terminal can retain the new communication function, but the order of these determinations may be reverse, or only either one of the determinations may be adopted.

In the present embodiment, since the association of the other mobile terminals 2B, 2C is carried out based on the request for association, i.e., the terminal information notification policy from the first mobile terminal 2A of the communication function modifying side, a user's intention of the first mobile terminal 2A of the communication function modifying side is respected, which improves convenience for the user. Particularly, where a new communication function, e.g., the pictograph II function is newly added in the first mobile terminal 2A and the pictograph II function is newly downloaded into the second mobile terminal 2B, the DL completion information in the second mobile terminal 2B is transmitted to the first mobile terminal 2A. As a consequence, the user using the first mobile terminal 2A can recognize that the user is now allowed to perform communication with the user of the second mobile terminal 2B through the use of the pictograph II function.

The present embodiment was described above with the example in which there was the modification to add the new communication function in the first mobile terminal 2A, but it can also be contemplated that the function modification information of the first mobile terminal 2A is also transmitted to the other mobile terminals 2B, 2C with modification based on deletion of a communication function which the first mobile terminal 2A has retained. In this case, each of the mobile terminals 2B, 2C receiving the function modification information outputs, for example, a function modification notification message of "Subscriber A deleted Pictograph II function. You are unable to perform communication with Subscriber A through Pictograph II function." to notify the user of the fact, and the users of the mobile terminals 2B, 2C receiving the function modification information can respond, e.g., so as to avoid the communication using the communication function deleted from the first mobile terminal 2A, which enables efficient and smooth communication.

### (Second Embodiment)

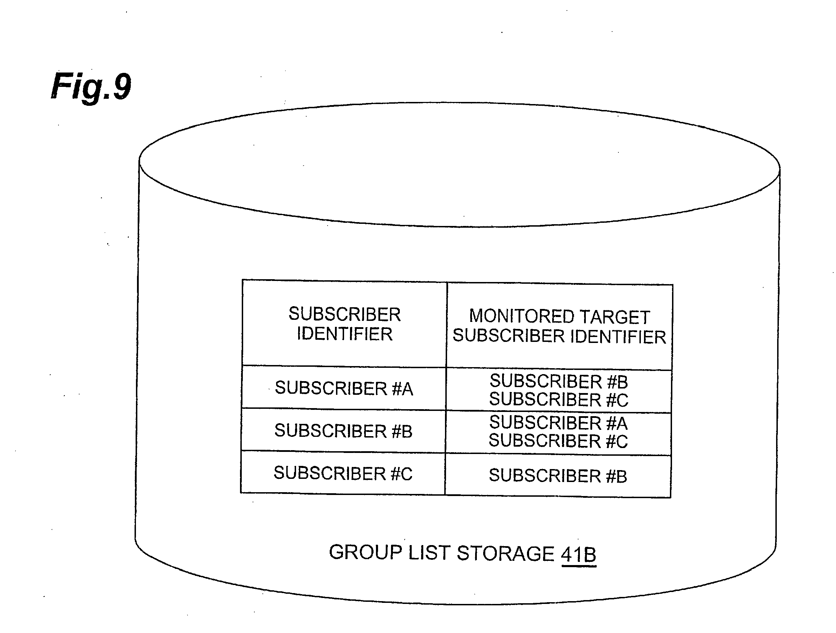

Next, the second embodiment of the present invention will be described with reference to Figs. 9 to 11. The communication system 1B will be described using the same reference symbols in the drawings for the same or equivalent elements as those in the communication system 1A of the first embodiment, without redundant description.

The communication system 1B has the first to third mobile terminals 2A, 2B, and 2C, a terminal profile management server (terminal function management server) 3B, a group list management server (group information storing means) 4B, and the DL (Down Load) server (download server) 5.

The processing determining unit 33 of the terminal profile management server 3B receives the terminal information notification policy (associated terminal information) transmitted from each mobile terminal 2A, 2B, or 2C, from the server-side information transceiver unit 34 and notifies the group list management server 4B of the terminal information notification policy through the notification target information transceiver unit 35, The terminal information notification policy according to the present embodiment contains the subscriber identifier and monitored target subscriber identifier of each mobile terminal 2A, 2B, 2C. The monitored target subscriber identifier is a subscriber identifier for specifying a target subscriber to be monitored as to the presence/absence of modification of retained functions.

The group list management server 4B has a group list storage unit 41B, the group list control unit 42, and the group information transceiver unit 43. The group information transceiver unit 43 receives the terminal information notification policy and the notification target search request information from the notification target information transceiver unit 35 of the terminal profile management server 3B and notifies the group list control unit 42 of the received information. It also receives the notification target search response information from the group list control unit 42 and transmits it to the notification target information transceiver unit 35.

The group list storage unit 41B stores a group list table and in the group list table one or more monitored target subscriber identifiers are stored in association with each subscriber identifier. The notification target subscriber identifier of the first embodiment was the information for specifying the predetermined notification target to be notified of the function modification information, based on the terminal information notification policy from the terminal device subjected to the modification of the retained functions. However, the monitored target subscriber identifier, different from the notification target subscriber identifier, is information for specifying a communication terminal device as a monitored target, based on the terminal information notification policy from the communication terminal device which intends to monitor a modification of the retained functions. If there is a modification of the retained functions of the monitored target, the function modification information is transmitted to the communication terminal device requesting the monitoring.

For example, in the group list table, as shown in Fig. 9, monitored target subscriber identifiers "subscriber #A" and "subscriber #C" are stored in association with the subscriber identifier "subscriber #B." Namely, an originator of the terminal information notification policy, i.e., an originator of the monitoring request is the second mobile terminal 2B of "subscriber #B," and if there is a modification of the retained functions of the first mobile terminal 2A or the third mobile terminal 2C of "subscriber #A" or "subscriber #C," the function modification information is transmitted to the second mobile terminal 2B.

### (Communication Method)

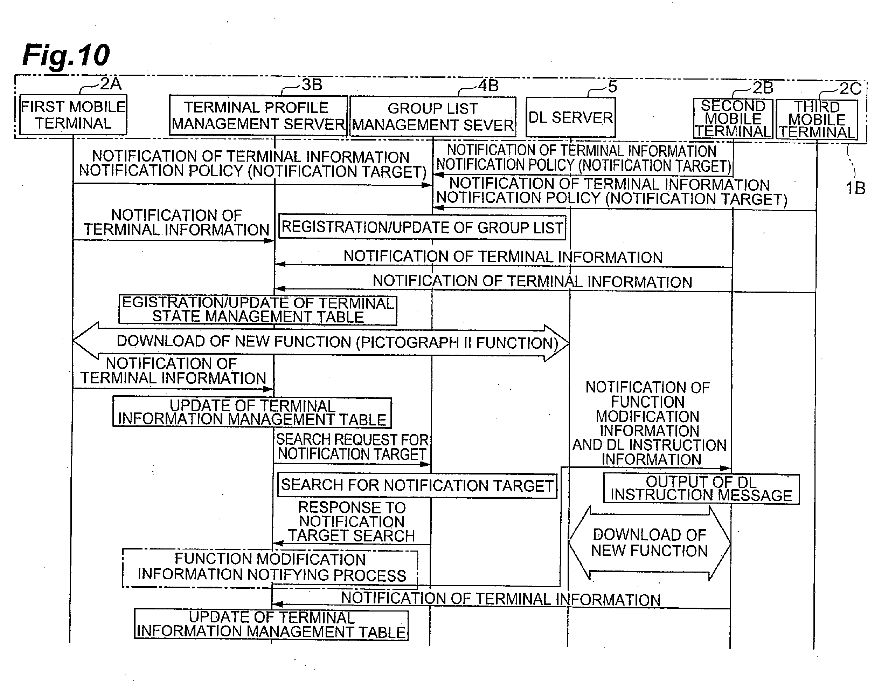

Next, a communication method executed in the communication system 1B will be described. Fig. 10 is a sequence chart showing an operation sequence executed in the communication system 1B. As shown in Fig. 10, the terminal information notification policy notified of by each of the first to third mobile terminals 2A, 2B, 2C contains one or more monitored target subscriber identifiers. For example, the terminal information notification policy from the second mobile terminal 2B contains "subscriber #A" and "subscriber #C" corresponding to user A and user C as monitored target subscriber identifiers. The group list control unit 42 of the group list management server 4B, receiving the terminal information notification policy, updates the group list table stored in the group list storage unit 41B.

Each of the first to third mobile terminals 2A, 2B, 2C notifies the terminal profile management server 3B of the terminal information at a predetermined period or optional timing. The terminal information contains a service identifier indicating the retained function, in addition to the subscriber identifier and terminal identifier. In the terminal profile management server 3B receiving the terminal information, the processing determining unit 33 executes registration and update of the terminal state management table stored in the terminal state storage unit 31 (terminal function storing step and terminal function modifying step).

For example, when a new function is downloaded into the first mobile terminal 2A, the processing determining unit 33 of the terminal profile management server 3A transmits a notification target search request to the group list management server 4B, in order to search for a terminal device whose monitored target is the first mobile terminal 2A. The group list control unit 42 of the group list management server 4B, receiving the notification target search request, searches the group list table of the group list storage unit 41B and extracts the subscriber identifier of the second mobile terminal 2B with which the subscriber identifier of the first mobile terminal 2A, or user A is set as the monitored target subscriber identifier. Furthermore, the processing determining unit 33 transmits a notification target search response containing the extracted subscriber identifier to the terminal profile management server 3A.

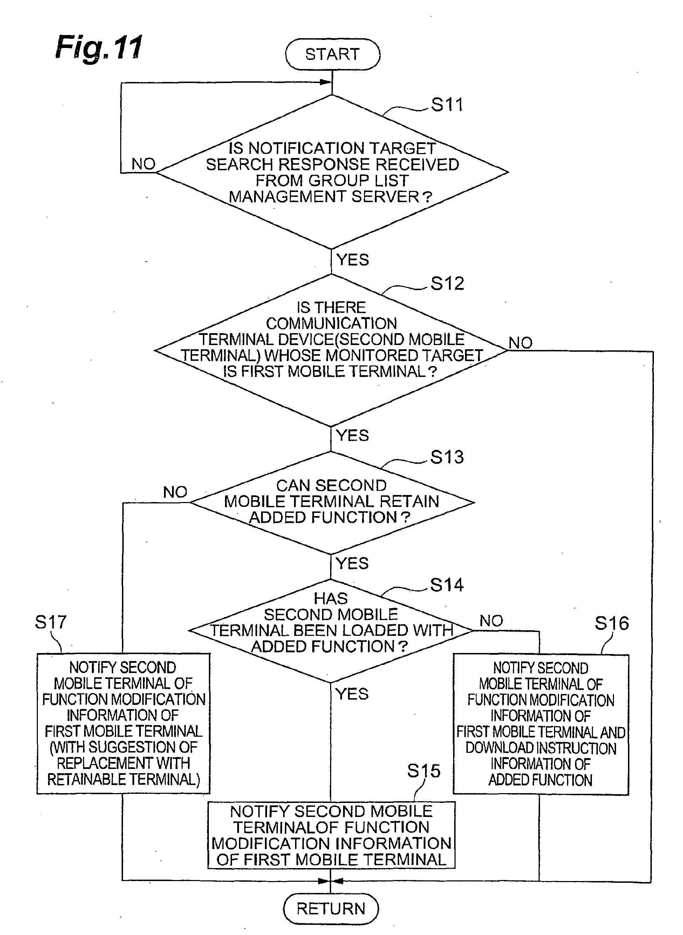

The following will describe a function modification information notifying process executed in the terminal profile management server 3B receiving the notification target search response. Fig. 11 is a flowchart showing an operation procedure of the function modification information notifying process executed in the terminal profile management server 3B.

When the pictograph II function is added in the first mobile terminal 2A, the processing determining unit 33 of the terminal profile management server 3B transmits the notification target search request for search for a user whose monitored target is the first mobile terminal 2A, to the group list management server 4B. After the transmission of the notification target search request, the processing determining unit 33 stands by to receive the notification target search response (step S11). When the processing determining unit 33 receives the notification target search response, it determines whether there is a terminal device whose monitored target is the first mobile terminal 2A (step S12). If there is no terminal device whose monitored target is the first mobile terminal 2A, the processing is terminated.

For example, where the second mobile terminal 2B has a monitored target of the first mobile terminal 2A, the processing determining unit 33 determines whether the second mobile terminal 2B can retain the added function in the first mobile terminal 2A, i.e., the pictograph II function (step S13). When the second mobile terminal 2B is determined to be incapable of retaining it, the processing determining unit 33 transmits the function modification information according to the first pattern to the second mobile terminal 2B (step S 17). The function modification information according to the first pattern is the same as in the first embodiment.

When the processing determining unit 33 determines that the second mobile terminal 2B can retain the pictograph II function, it then determiners whether the second mobile terminal 2B has already been loaded with the pictograph II function, i.e., whether the second mobile terminal 2B already retains it (step S14). The processing (determining unit 33 transmits the function modification information and DL instruction information according to the second pattern to the second mobile terminal 2B if in an unloaded state (step S16), and transmits the function modification information according to the third pattern to the second mobile terminal 2B if in a loaded state (step S15). The function modification information according to the second pattern and the third pattern is the same as in the first embodiment. The step S15, step S16, and step S17 correspond to the function modification notifying step.

As shown in Fig. 10, the second mobile terminal 2B, receiving the function modification information and DL instruction information, outputs the DL instruction message from the output unit 26. Since the first mobile terminal 2A is not a monitored target of the third mobile terminal 2C, the function modification information is not transmitted.

In the present embodiment, the terminal profile management server 3B manages the communication functions retained by each of the mobile terminals 2A-2C and if there is a modification of the communication functions retained by the first mobile terminal 2A, the retained functions stored in correspondence to the subscriber identifier "subscriber #A" of the first mobile terminal 2A in the terminal state storage unit 31 are modified based on the tenninal information transmitted from the first mobile terminal 2A. Furthermore, in accordance with the modification of the communication functions retained by the first mobile terminal 2A, the processing determining unit 33 transmits the function modification information indicating the modification of the communication functions of the first mobile terminal 2A, to the second and third mobile terminals 2B, 2C associated as monitored targets of the first mobile terminal 2A. The second and third mobile terminals 2B, 2C, receiving the function modification information of the first mobile terminal 2A, output a predetermined message. The users of the second and third mobile terminals 2B, 2C can optionally acquire the newly added communication function, e.g., the pictograph II function by downloading it from the DL server 5, according to the content of the function modification of the first mobile terminal 2A. As a result, it becomes feasible to perform efficient and smooth communication.

In the present embodiment, since the association with the other mobile terminal 2A is carried out based on the request for association from the second or third mobile terminal 2B, 2C requesting monitoring of the first mobile terminal 2A, i.e., based on the terminal information notification policy, a user's intention of the second or third mobile terminal 2B, 2C of the monitoring requesting side is respected, which improves the convenience for the user.

The present embodiment was described above with the example in which there was the modification to add the new communication function in the first mobile terminal 2A, but it can also be contemplated that the function modification information of the first mobile terminal 2A is also transmitted to the second and third mobile terminals 2B, 2C of the monitoring requesting sources, with modification based on deletion of the communication function which the first mobile terminal 2A has retained. In this case, each of the mobile terminals 2B, 2C receiving the function modification information outputs, for example, a function modification notification message of "Subscriber A deleted Pictograph II function. You are unable to perform communication with Subscriber A through Pictograph II function." to notify the user of the fact, and thus the users of the mobile terminals 2B, 2C receiving the function modification information can respond, e.g., so as to avoid the communication using the communication function deleted from the first mobile terminal 2A, which enables efficient and smooth communication.

### (Third Embodiment)

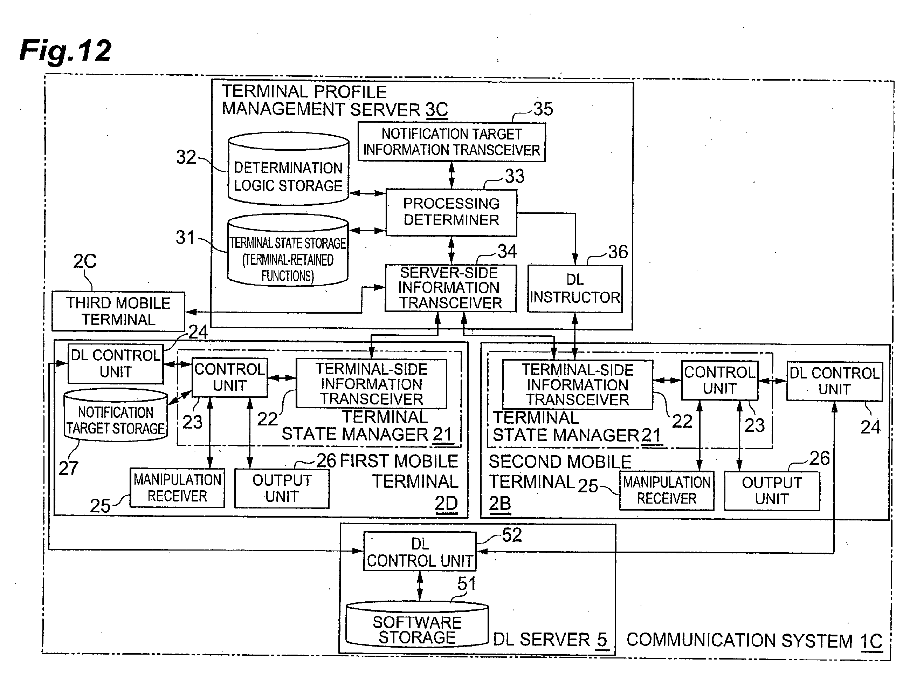

Next, the third embodiment of the present invention will be described with reference to Figs. 12, 13, and 14. The communication system 1C will be explained with the same reference symbols in the drawings for the same or equivalent elements as those in the communication system 1A of the first embodiment, without redundant description.

The communication system 1C has a first mobile terminal 2D and the second and third mobile terminals 2B, 2C, a terminal profile management server (terminal function management server) 3C, and the DL (Down Load) server (download server) 5. The communication system 1C of the present embodiment is not provided with the group list management server 4A or 4B.

The first mobile terminal 2D, different from the mobile terminal 2A of the first embodiment, has a notification target storage unit 27. The notification target storage unit 27 stores a notification target subscriber identifier for specifying a notification destination of function modification information. The control unit 23 of the mobile terminal 2D executes registration and update of the notification target subscriber identifiers stored in the notification target storage unit 27, based on an input manipulation received by the manipulation receiving unit 25. Furthermore, the control unit 23 generates terminal information so as to contain one or more notification target subscriber identifiers stored in the notification target storage unit 27, and transmits the generated terminal information to the terminal profile management server 3C on a regular or optional basis.

The processing determining unit 33 of the terminal profile management server 3C, receiving the terminal information, updates the terminal state management table of the terminal state storage unit 31, based on the terminal information. Furthermore, when the processing determining unit 33 determines that a new function is added in the terminal device of the originator of the terminal information, e.g., the first mobile terminal 2D, it extracts the notification target subscriber identifiers from the received terminal information and transmits the function modification information to the terminal devices specified by the extracted notification target subscriber identifiers, e.g., the second mobile terminal 2B and the third mobile terminal 2C.

### (Communication Method)

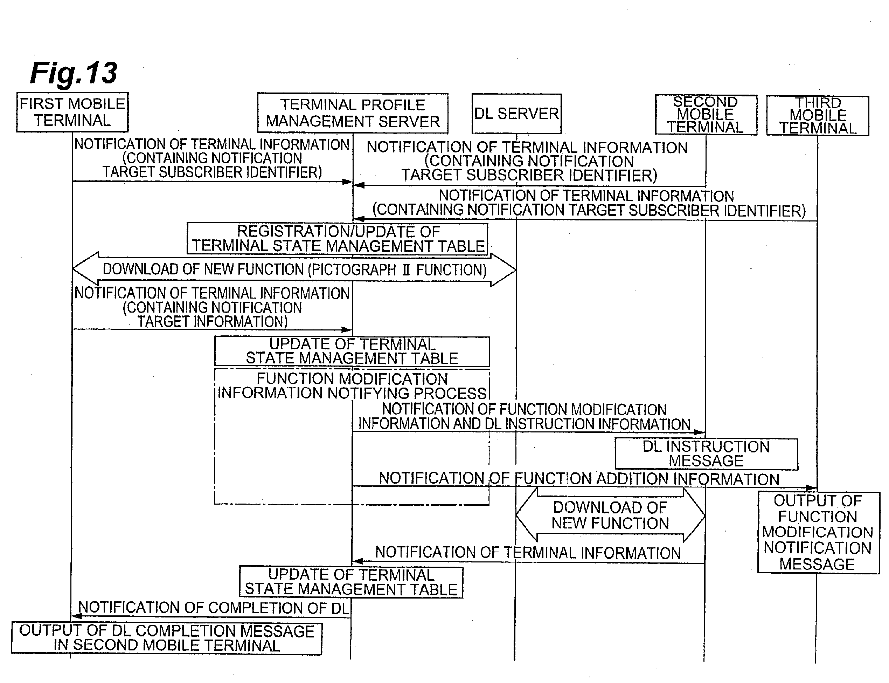

Next, a communication method executed in the communication system 1C will be described. Fig. 13 is a sequence chart showing an operation sequence executed in the communication system 1C. As shown in Fig. 13, the terminal information notified of by each of the first to third mobile terminals 2A, 2B, 2C contains the subscriber identifier, terminal identifier, service identifier, and notification target subscriber identifier. The terminal profile management server 3C updates the terminal state management table of the terminal state storage unit 31, based on the received terminal information.

When a new function, e.g., the pictograph II function is downloaded into the first mobile terminals 4D, the terminal profile management server 3C receiving the terminal information from the first mobile terminal 4D updates the terminal state management table of the terminal state storage unit 31, based on the received terminal information.

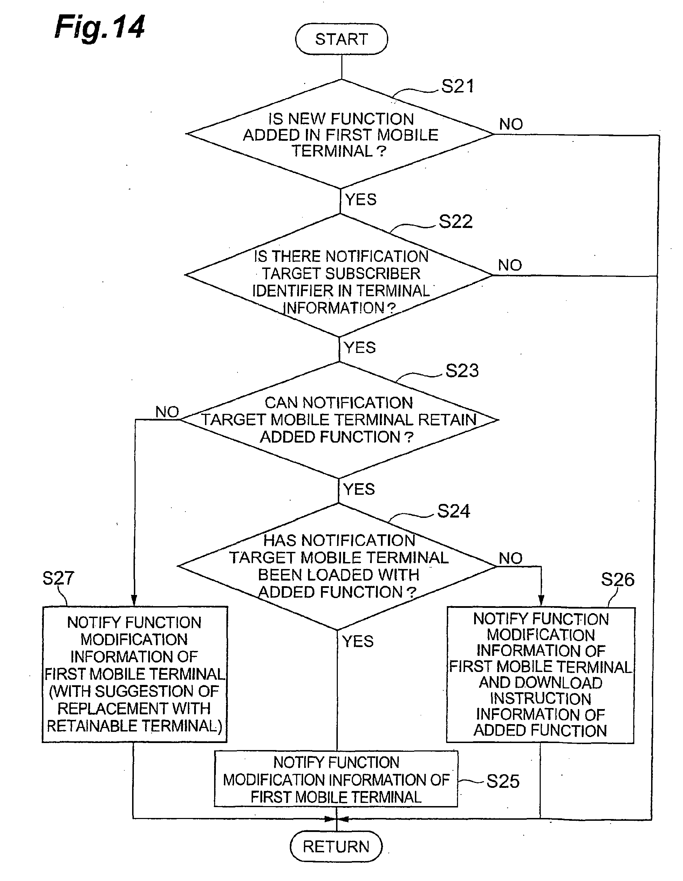

Next, the processing determining unit 33 of the terminal profile management server 3C executes the function modification information notifying process. Fig. 14 is a flowchart showing an operation procedure of the notification function modifying process. The processing determining unit 33 determines whether the new function was added in the first mobile terminal 2D, based on the terminal information from the first mobile terminal 2D (step S21). When it determines that no new function was added, the processing is terminated without execution of the subsequent processing.

When the processing determining unit 33 determines that a new function was added in the first mobile terminal 2D, it determines whether a notification target subscriber identifier is contained in the terminal information from the first mobile terminal 2D (step S22). When it is not contained, the processing is terminated without execution of the subsequent processing.

Next, the processing determining unit 33 extracts the notification target subscriber identifier contained in the terminal information from the first mobile terminal 2D and, for example, specifies the second mobile terminal 2B and the third mobile terminal 2C. Furthermore, the processing determining unit 33 determines whether the specified mobile terminal can retain the added function, e.g., the pictograph II function, for each of the specified mobile terminals 2B, 2C (step S23). The processing determining unit 33 transmits the function modification information according to the first pattern to the mobile terminal 2C incapable of retaining the added function, and executes the subsequent processing for the mobile terminal 2B capable of retaining the added function. The function modification information according to the first pattern is the same as in the first embodiment.

Next, the processing determining unit 33 determines whether the second mobile terminal 2B capable of retaining the pictograph II function has already been loaded with the pictograph II function, i.e., whether the second mobile terminal 2B already retains it (step S26). When it is determined that the second mobile terminal 2B is unloaded therewith, the processing determining unit 33 transmits the function modification information according to the second pattern and the DL instruction information to the second mobile terminal 2B (step S26). When it is determined that the second mobile terminal 2B has already been loaded with the added function, the processing determining unit 33 transmits the function modification information according to the third pattern. The function modification information according to the second and third patterns is the same as in the first embodiment. The step S25, step S26, and step S27 correspond to the function modification notifying step.

As shown in Fig. 13, the third mobile terminal 2C, receiving the function modification information, outputs the function, modification notification message from the output unit. The second mobile terminal 2B, receiving the function modification information and DL instruction information, outputs the DL instruction message from the output unit 26.

When the download of the pictograph II function is completed in the second mobile terminal 2B, the second mobile terminal 2B notifies the terminal profile management server 3C of the terminal information containing the service identifier of the pictograph II function. The terminal profile management server 3C, receiving the terminal information containing the service identifier of the pictograph II function from the second mobile terminal 2B, updates the terminal state management table stored in the terminal state storage unit 31. Furthermore, the terminal profile management server 3C transmits a download completion notification of the pictograph II function in the second mobile terminal 2B to the first mobile terminal 2D.

In the present embodiment, the terminal profile management server 3C manages the communication functions retained by the respective mobile terminals 2D, 2B, 2C and if there is a modification of the communication functions retained by the first mobile terminal 2D, the retained functions stored in correspondence to the subscriber identifier "subscriber #A" of the first mobile terminal 2D in the terminal state storage unit 31 are modified based on the terminal information transmitted from the first mobile terminal 2D. Furthermore, the processing determining unit 33 specifies the second and third mobile terminals 2B, 2C associated with the first mobile terminal 2D, based on the notification target subscriber identifiers contained in the terminal information, and, in accordance with the modification of the communication functions retained by the first mobile terminal 2D, it transmits the function modification information indicating the modification of the communication functions of the first mobile terminal 2A, to the mobile terminals 2B, 2C. The second and third mobile terminals 2B, 2C, receiving the function modification information of the first mobile terminal 2A, output a predetermined message. The users of the second and third mobile terminals 2B, 2C can optionally acquire the newly added communication function, e.g. the pictograph II function by downloading it from the DL server 5, according to the content of the function modification of the first mobile terminal 2A. As a result, it becomes feasible to implement efficient and smooth communication.

The present invention is not limited to the above embodiments only. For example, in the first and second embodiments described above, the group list management server 4A or 4B was provided separately from the terminal profile management server (terminal function management server) 3A or 3B, and the association among the mobile terminals 2A-2C was managed in the group list storage unit 41 of the group list management server 4A, 4B; however, it is also possible to adopt a configuration wherein the group list storage unit is provided in the terminal profile management server 3A or 3B.

In the above embodiments, the mobile terminal 2B receiving the DL instruction information waits for a user's input manipulation, and with execution of the input manipulation for the DL request, the download request is transmitted to the DL server 5 to download the predetermined communication function; however, it is also possible to adopt a configuration wherein, without waiting for the user's input manipulation, the download request is immediately transmitted to the DL server 5 with reception of the DL instruction information to perform the download of the predetermined communication function.

## Claims

1. A terminal function management server (3A) adapted to store a communication function retained by a communication terminal device(2A), out of a plurality of communication functions to enable a plurality of communications of different communication modes,
said terminal function management server (3A) comprising:
terminal function storing means (31) adapted to store terminal
state information indicating one or more communication functions retained and retainable by each communication terminal device of a plurality of communication terminal devices (2A, 2B, 2C), in correspondence to each communication terminal device (2A, 2 B, 2C and
processing determining means (33) adapted to receive communication function retention information transmitted from a communication terminal device (2A, 2B, 2C) and adapted to modify the communication functions stored in the terminal function storing means (31), based on the communication function retention information,
wherein the processing determining means (33), when modifying the communication functions stored in correspondence to a first communication terminal device (2A) out of the plurality of communication terminal devices (2A, 2B, 2C) in the terminal function storing means (31), is adapted to transmit function modification information indicating the modification of the communication functions of said first communication terminal device (2A), to at least one target second communication terminal device (2B, 2C) of a plurality of communication terminal devices associated with the first communication terminal device terminal state information indicating, said function modification information further comprising whether the modified communication functions stored in the terminal function storing means (31) corresponding to said first communication terminal device (2A) are retainable by the at least one target second communication terminal device of said plurality of communication terminal devices associated with the first communication terminal device (2B, 2C).

2. The terminal function management server (3A) according to claim 1, wherein the processing determining means (33) is adapted to specify said at least one target second communication terminal device of said plurality of communication terminal devices (2B, 2C) based on identification information
acquired from group information storing means (41A) storing the identification information of the at least one target second communication terminal device of said plurality of communication terminal devices associated with the first terminal communication device (2B, 2C), and transmits the function modification information to the at least one target second communication terminal device of said plurality of communication terminal devices associated with the first communication terminal device (2B, 2C) thus specified.

3. The terminal function management server (3A) according to claim 1, wherein the communication function retention information contains identification information of the at least one target second communication terminal device of said plurality of communication terminal devices (2B, 2C) associated with the first communication terminal device, and
wherein the processing determining means (33) is adapted to specify the at least one target second communication terminal device of said plurality of communication terminal devices (2B, 2C), based on the identification information contained in the communication function retention information, and is adapted to transmit the function modification information to the at least one target second communication terminal device of said plurality of communication terminal devices associated with the first communication terminal device (2B, 2C) thus specified.

4. The terminal function management server (3A) according to any one of claims 1 to 3, wherein when the communication functions stored in the terminal function storing means (31) are modified by adding a new communication function in correspondence to the first communication terminal device (2A), the processing determining means (33) is adapted to determine whether the at least one target second communication terminal device of said plurality of communication terminal devices (2B, 2C) associated with the first communication terminal device retains the new communication function,
the terminal function management server (3A) further comprising download instructing means (52) adapted to transmit download instruction information to instruct a download of the new communication function, to the at least one target second communication terminal device of said plurality of communication terminal devices associated with the first communication terminal device (2B, 2C) determined not to retain the new communication function by the processing determining means (33).

5. The terminal function management server (3A) according to any one of claims 1 to 3, wherein the terminal function storing means (3 1) is further adapted to store a communication function which the communication terminal device (2A) can retain, and
wherein when the communication functions stored in the terminal function storing means (31) are modified by adding a new communication function in correspondence to the first communication terminal device (2A), the processing determining means (33) is adapted to determine whether the at least one target second communication terminal device of said plurality of communication terminal devices associated with the first communication terminal device (2B, 2C) can retain the new communication function,
the terminal function management server (3A) further comprising download instructing means (52) adapted to transmit download instruction information to instruct a download of the new communication function, to the at least one target second communication terminal device of said plurality of communication terminal devices associated with the first communication terminal device (2B, 2C) determined to be able to retain the new communication function, by the processing determining means (33).

6. A communication system comprising a terminal function management server (3A) which is adapted to store a communication function retained by a communication terminal device (2A), out of a plurality of communication functions (2A, 2B, 2C) to enable a plurality of communications of different communication modes,
wherein said terminal function management server comprises: terminal function storing means (31) adapted to store terminal state information indicating one or more communication functions retained and retainable by each communication terminal device of a plurality of communication terminal devices (2A, 2B, 2C), in correspondence to each communication terminal device; and
processing determining means (33) adapted to receive communication function retention information transmitted from an communication terminal device (2A 2B, 2C) and adapted to modify the communication functions stored in the terminal function storing means (3 1), based on the communication function retention information,
wherein the processing determining means(33), when modifying the communication functions stored in correspondence to a first communication terminal device (2A) out of the plurality of communication terminal devices (2A, 2B, 2C) in the terminal function storing means (31), is adapted to transmit function modification information indicating the modification of the communication functions of said first communication terminal device (2A), to at least one target second communication terminal device (2B, 2C) of a plurality of communication terminal devices associated with the first communication terminal device and said function modification further comprising terminal state information indicating whether the modified communication functions stored in the terminal function storing means (31) corresponding to said first communication terminal device are retainable by the at least one target second communication terminal device of said plurality of communication terminal devices associated with the first communication terminal device (2B, 2C).

7. The communication system according to claim 6, further comprising: a group information management server (4A) having group information storing means (41 A) adapted to store identification information of the at least one target second communication terminal device of said plurality of communication terminal devices associated with the first communication terminal device (2B, 2C), and group information transmitting/receiving means (43) to transmit the identification information of the at least one target second communication terminal device of said plurality of communication terminal devices associated with the first communication terminal device (2B, 2C) to the terminal function management server (3A), according to an inquiry from the terminal function management server (3A),
wherein the processing determining-means (33) of the terminal function management server (3A) is adapted to specify the at least one target second communication terminal device of said plurality of communication terminal devices associated with the first communication terminal device (2B, 2C), based on the identification information received from the group information management server (4A), and is adapted to transmit the function modification information to the at least one target second communication terminal device of said plurality of communication terminal devices associated with the first communication terminal device (2B, 2C) thus specified.

8. A communication method executed in a communication system comprising a terminal function management server (3A) which is adapted to store a communication function retained by a communication terminal device, out of a plurality of communication functions to enable a plurality of communications of different communication modes,
the communication method comprising:
a terminal function storing step of storing terminal state information indicating one or more communication functions retained and retainable by each communication terminal device of a plurality of communication terminal devices (2A, 2B, 2C), in correspondence to each communication terminal device (2A ,2B, 2C);
a terminal function modifying step of receiving communication function retention information transmitted from a first communication terminal device (2A) out of the plurality of communication terminal devices (2A, 2B, 2C), and modifying the communication functions stored in correspondence to the first communication terminal device (2A) in terminal function storing means (31), based on the communication function retention information; and
a function modification notifying step of transmitting function modification information indicating the modification of the communication functions of the first communication terminal device (2A) to at least one target second communication terminal device (2B, 2C) of a plurality of communication terminal devices associated with the first communication terminal device and said function modification information further comprising terminal state information indicating whether the modified communication functions stored in the terminal function storing means (31) corresponding to the first communication terminal device (2A) are retainable by the at least one target second communication terminal device of said plurality of communication terminal devices associated with the first communication terminal device (2B, 2C).

## Patentansprüche

1. Ein Endgerätefunktions-Verwaltungsserver (3A), welcher eingerichtet ist, eine in einem Kommunikationsendgerät (2A) enthaltene Kommunikationsfunktion aus einer Mehrzahl von Kommunikationsfunktionen zum Ermöglichen einer Mehrzahl von Kommunikationen unterschiedlicher Kommunikationsmodi zu speichern, wobei der Endgerätefunktions-Verwaltungsserver (3A) aufweist:
ein Endgerätefunktions-Speichermittel (31), welches eingerichtet ist, eine Endgerätezustandsinformation zu speichern, welche eine oder mehrere Kommunikationsfunktionen anzeigt, welche von jedem Kommunikationsendgerät aus einer Mehrzahl von Kommunikationsendgeräten (2A, 2B, 2C) enthalten sind und enthalten sein können, entsprechend jedem Kommunikationsendgerät (2A, 2B, 2C), und
ein Verarbeitungsbestimmungsmittel (33), welches eingerichtet ist, eine von einem Kommunikationsendgerät (2A, 2B, 2C) gesendete Kommunikationsfunktions-Enthalteinformation zu empfangen, und welches eingerichtet ist, die in dem Endgerätefunktions-Speichermittel (31) gespeicherten Kommunikationsfunktionen zu modifizieren basierend auf der Kommunikationsfunktion-Enthalteinformation,
wobei das Verarbeitungsbestimmungsmittel (33), wenn es die in dem Endgerätefunktions-Speichermittel (31) gespeicherten Kommunikationsfunktionen entsprechend einem ersten Kommunikationsendgerät (2A) von einer Mehrzahl von Kommunikationsendgeräten (2A, 2B, 2C) modifiziert, eingerichtet ist, eine Funktionsmodifikationsinformation, welche die Modifikation der Kommunikationsfunktionen des ersten Kommunikationsendgerätes (2A) anzeigt, an mindestens ein Zielkommunikationsendgerät (2B, 2C) von einer Mehrzahl von Kommunikationsendgeräten zu übermitteln, welches mit dem ersten Kommunikationsendgerät assoziiert ist, wobei die Funktionsmodifikationsinformation ferner eine Endgerätezustandsinformation aufweist, welche anzeigt, ob die in dem Endgerätefunktions-Speichermittel (31) gespeicherten dem ersten Kommunikationsendgerät (2A) entsprechenden Kommunikationsfunktionen in dem mindestens einen zweiten Zielkommunikationsendgerät von der Mehrzahl von Kommunikationsendgeräten, welches mit dem ersten Kommunikationsendgerät (2B, 2C) assoziiert ist, enthalten sein können.

2. Endgerätefunktions-Verwaltungsserver (3A) gemäß Anspruch 1,
wobei das Verarbeitungsbestimmungsmittel (33) eingerichtet ist, mindestens ein zweites Zielkommunikationsendgerät von der Mehrzahl der Kommunikationsendgeräte (2B, 2C) zu bestimmen basierend auf einer Identifikationsinformation, welche von einem Gruppeninformations-Speichermittel (41A) erhalten wird, welches die Identifikationsinformation von dem mindestens einem zweiten Zielkommunikationsendgerät von der Mehrzahl von Kommunikationsendgeräten speichert, welches mit dem ersten Zielkommunikationsendgerät (2B, 2C) assoziiert ist, und die Funktionsmodifikationsinformation an mindestens das eine zweite Zielkommunikationsendgerät von der Mehrzahl der Kommunikationsendgeräte sendet, welches mit dem ersten somit bestimmten Zielkommunikationsendgerät (2B, 2C) assoziiert ist.

3. Endgerätefunktions-Verwaltungsserver (3A) gemäß Anspruch 1,
wobei die Kommunikationsfunktions-Enthalteinformation eine Identifikationsinformation aufweist von dem mindestens einen zweiten Zielkommunikationsendgerät aus der Mehrzahl der Kommunikationsendgeräte (2B, 2C), welches mit dem ersten Zielkommunikationsendgerät assoziiert ist, und wobei das Verarbeitungsbestimmungsmittel (33) eingerichtet ist das mindestens eine zweite Zielkommunikationsendgerät aus der Mehrzahl der Kommunikationsendgeräte (2B, 2C) zu bestimmen basierend auf der Identifikationsinformation, welche in der Kommunikationsfunktions-Enthalteinformation enthalten ist, und eingerichtet ist, die Funktionsmodifikationsinformation an das mindestens eine zweite Zielkommunikationsendgerät von der Mehrzahl der Kommunikationsendgeräte zu übermitteln, welches mit dem ersten somit bestimmten Zielkommunikationsendgerät (2B, 2C) assoziiert ist.

4. Endgerätefunktions-Verwaltungsserver (3A) gemäß einem der Ansprüche 1 bis 3,
wobei wenn die in dem Endgerätefunktions-Speichermittel (31) gespeicherten Kommunikationsfunktionen modifiziert werden durch Hinzufügen einer neuen Kommunikationsfunktion entsprechend dem ersten Kommunikationsendgerät (2A), das Verarbeitungsbestimmungsmittel (33) eingerichtet ist zu bestimmen, ob das mindestens eine zweite Kommunikationsendgerät von der Mehrzahl der Kommunikationsendgeräte (2B, 2C), welches mit dem ersten Kommunikationsendgerät assoziiert ist, die neue Kommunikationsfunktion enthält,
wobei der Endgerätefunktions-Verwaltungsserver (3A) ferner ein Herunterladeinstruktionsmittel (52) aufweist, welches eingerichtet ist, Herunterladeinstruktionen zum Instruieren eines Herunterladens der neuen Kommunikationsfunktion zu übermitteln an das mindestens eine zweite Zielkommunikationsendgerät von der Mehrzahl der Kommunikationsendgeräte zu übermitteln, welches mit dem ersten Zielkommunikationsendgerät (2B, 2C) assoziiert ist und von dem Verarbeitungsbestimmungsmittel (33) ermittelt wurde, dass es die neue Kommunikationsfunktion nicht enthält.

5. Endgerätefunktions-Verwaltungsserver (3A) gemäß einem der Ansprüche 1 bis 3,
wobei das Endgerätefunktions-Speichermittel (31) ferner eingerichtet ist eine Kommunikationsfunktion zu speichern, welche das Kommunikationsendgerät (2A) enthalten kann, und wobei die in dem Endgerätefunktions-Speichermittel (31) gespeicherten Kommunikationsfunktionen modifiziert werden durch Hinzufügen einer neuen Kommunikationsfunktion entsprechend dem ersten Kommunikationsendgerät (2A), das Verarbeitungsbestimmungsmittel (33) eingerichtet ist zu bestimmen, ob das mindestens eine zweite Kommunikationsendgerät von der Mehrzahl der Kommunikationsendgeräte (2B, 2C), welches mit dem ersten Kommunikationsendgerät assoziiert ist, die neue Kommunikationsfunktion enthalten kann,
wobei der Endgerätefunktions-Verwaltungsserver (3A) ferner ein Herunterladeinstruktionsmittel (52) aufweist, welches eingerichtet ist Herunterladeinstruktionen zum Instruieren eines Herunterladens der neuen Kommunikationsfunktion zu übermitteln an das mindestens eine zweite Zielkommunikationsendgerät von der Mehrzahl der Kommunikationsendgeräte, welches mit dem ersten Zielkommunikationsendgerät (2B, 2C) assoziiert ist und von dem Verarbeitungsbestimmungsmittel (33) ermittelt wurde, dass es fähig ist die neue Kommunikationsfunktion zu enthalten.

6. Ein Kommunikationssystem aufweisend einen Endgerätefunktions-Verwaltungsserver (3A), welcher eingerichtet ist eine in einem Kommunikationsendgerät (2A) enthaltene Kommunikationsfunktion aus einer Mehrzahl von Kommunikationsfunktionen (2A, 2B, 2C) zu speichern zum Ermöglichen einer Mehrzahl von Kommunikationen unterschiedlicher Kommunikationsmodi, wobei der Endgerätefunktions-Verwaltungsserver (3A) aufweist:
ein Endgerätefunktions-Speichermittel (31), welches eingerichtet ist, eine Endgerätezustandsinformation zu speichern, welche eine oder mehrere Kommunikationsfunktionen anzeigt, welche in jedem Kommunikationsendgerät von einer Mehrzahl von Kommunikationsendgeräten (2A, 2B, 2C) enthalten sind und enthalten sein können entsprechend jedem Kommunikationsendgerät (2A, 2B, 2C), und
ein Verarbeitungsbestimmungsmittel (33), welches eingerichtet ist, eine von einem Kommunikationsendgerät (2A, 2B, 2C) übermittelte Kommunikationsfunktions-Enthalteinformation zu empfangen, und welches eingerichtet ist, die in dem Endgerätefunktions-Speichermittel (31) gespeicherten Kommunikationsfunktionen zu modifizieren basierend auf der Kommunikationsfunktion-Enthalteinformation,
wobei das Verarbeitungsbestimmungsmittel (33), wenn es die in dem Endgerätefunktions-Speichermittel (31) gespeicherten Kommunikationsfunktionen entsprechend einem ersten Kommunikationsendgerät (2A) von einer Mehrzahl von Kommunikationsendgeräten (2A, 2B, 2C) modifiziert, eingerichtet ist, eine Funktionsmodifikationsinformation, welche die Modifikation der Kommunikationsfunktionen des ersten Kommunikationsendgerätes (2A) anzeigt, an mindestens ein Zielkommunikationsendgerät (2B, 2C) von einer Mehrzahl von Kommunikationsendgeräten zu übermitteln, welches mit dem ersten Kommunikationsendgerät assoziiert ist, wobei die Funktionsmodifikationsinformation ferner eine Endgerätezustandsinformation aufweist, welche anzeigt, ob die in dem Endgerätefunktions-Speichermittel (31) gespeicherten dem ersten Kommunikationsendgerät entsprechenden Kommunikationsfunktionen in dem mindestens einen zweiten Zielkommunikationsendgerät von der Mehrzahl von Kommunikationsendgeräten, welches mit dem ersten Kommunikationsendgerät (2B, 2C) assoziiert ist, enthalten sein können.

7. Das Kommunikationssystem gemäß Anspruch 6, ferner aufweisend:
einen Gruppeninformations-Verwaltungsserver (4A), welcher ein Gruppeninformations-Speichermittel (41A), welches eingerichtet ist die Identifikationsinformation von dem mindestens einen zweiten Zielkommunikationsendgerät aus der Mehrzahl von Kommunikationsendgeräten zu speichern, welches mit dem ersten Zielkommunikationsendgerät (2B, 2C) assoziiert ist, und Gruppeninformationsübermittlungsmittel/ Gruppeninformationsempfangsmittel (43) aufweist zum Übermitteln der Identifikationsinformation von dem mindestens einen zweiten Kommunikationsendgerät aus der Mehrzahl von Kommunikationsendgeräten, welches mit dem ersten Zielkommunikationsendgerät (2B, 2C) assoziiert ist, an den Endgerätefunktions-Verwaltungsserver (3A) entsprechend einer Anfrage von dem Endgerätefunktions-Verwaltungsserver (3A),
wobei das Verarbeitungsbestimmungsmittel (33) des Endgerätefunktions-Verwaltungsservers (3A) eingerichtet ist das mindestens eine zweite Zielkommunikationsendgerät aus der Mehrzahl der Kommunikationsendgeräte zu bestimmen, welches mit dem ersten Kommunikationsendgerät (2B, 2C) assoziiert ist, basierend auf einer Identifikationsinformation, welche von dem Gruppeninformations-Verwaltungsserver (4A) erhalten wird, und eingerichtet ist die Funktionsmodifikationsinformation an mindestens das eine zweite Zielkommunikationsendgerät von der Mehrzahl der Kommunikationsendgeräte zu übermitteln, welches mit dem ersten somit bestimmten Zielkommunikationsendgerät (2B, 2C) assoziiert ist.

8. Ein Kommunikationsverfahren, welches in einem Kommunikationssystem ausgeführt wird aufweisend einen Endgerätefunktions-Verwaltungsserver (3A), welcher eingerichtet ist eine in einem Kommunikationsendgerät enthaltene Kommunikationsfunktion aus einer Mehrzahl von Kommunikationsfunktionen zum Ermöglichen einer Mehrzahl von Kommunikationen unterschiedlicher Kommunikationsmodi zu speichern, wobei das Kommunikationsverfahren aufweist:
einen Endgerätefunktions-Speicherschritt, in dem eine Endgerätezustandsinformation gespeichert wird, welche eine oder mehrere Kommunikationsfunktionen anzeigt, welche in jedem Kommunikationsendgerät aus einer Mehrzahl von Kommunikationsendgeräten (2A, 2B, 2C) enthalten sind und enthalten sein können entsprechend jedem Kommunikationsendgerät (2A, 2B, 2C),
einen Endgerätefunktions-Modifizierungsschritt, in dem eine von einem ersten Kommunikationsendgerät (2A) aus der Mehrzahl von Kommunikationsendgeräten (2A, 2B, 2C) übermittelte Kommunikationsfunktions-Enthalteinformation empfangen wird und die entsprechend dem ersten Kommunikationsendgerät (2A) in einem Endgerätefunktions-Speichermittel (31) gespeicherten Kommunikationsfunktionen modifiziert werden basierend auf der Kommunikationsfunktions-Enthalteinformation; und
einen Funktionsmodifizierungs-Benachrichtigungsschritt, in dem eine Funktionsmodifikationsinformation, welche die Modifikation der Kommunikationsfunktionen des ersten Kommunikationsendgerätes (2A) anzeigt, an mindestens ein zweites Zielkommunikationsendgerät(2B, 2C) aus einer Mehrzahl von Kommunikationsendgeräten zu übermitteln, welches mit dem ersten Zielkommunikationsendgerät assoziiert ist, wobei die Funktionsmodifikationsinformation ferner eine Zustandsinformation aufweist, welche anzeigt, ob die in dem Endgerätefunktions-Speichermittel (31) gespeicherten modifizierten Kommunikationsfunktionen, welche dem ersten Kommunikationsendgerät (2A) entsprechen, in dem mindestens einen zweiten Zielkommunikationsendgerät von der Mehrzahl von Kommunikationsendgeräten, welches mit dem ersten Kommunikationsendgerät (2B, 2C) assoziiert ist, enthalten sein können.

## Revendications

1. Serveur de gestion de fonction de terminal (3A) adapté pour stocker une fonction de communication conservée par un dispositif de terminal de communication (2A), parmi une pluralité de fonctions de communication afin de permettre une pluralité de communications de modes de communication différents ;
ledit serveur de gestion de fonction de terminal (3A) comprenant :
un moyen de stockage de fonction de terminal (31) adapté pour stocker des informations d'état de terminal indiquant une ou plusieurs fonctions de communication conservée(s) et conservable(s) par chacun des dispositifs de terminal de communication d'une pluralité de dispositifs de terminaux de communication (2A, 2B, 2C), en correspondance avec chaque dispositif de terminal de communication (2A, 2B, 2C) ; et
un moyen de détermination de traitement (33) adapté pour recevoir des informations de rétention de fonction de communication émises par un dispositif de terminal de communication (2A, 2B, 2C) et adapté pour modifier les fonctions de communication stockées dans le moyen de stockage de fonction de terminal (31), sur la base des informations de rétention de fonction de communication ;
dans lequel le moyen de détermination de traitement (33), lorsqu'il modifie les fonctions de communication stockées en correspondance avec un premier dispositif de terminal de communication (2A) parmi la pluralité de dispositifs de terminaux de communication (2A, 2B, 2C) dans le moyen de stockage de fonction de terminal (31), est adapté pour émettre des informations de modification de fonction indiquant la modification des fonctions de communication dudit premier dispositif de terminal de communication (2A), vers au moins un deuxième dispositif de terminal de communication cible (2B, 2C) d'une pluralité de dispositifs de terminaux de communication associés au premier dispositif de terminal de communication, lesdites informations de modification de fonction comprenant en outre des informations d'état de terminal indiquant si les fonctions de communication modifiées stockées dans le moyen de stockage de fonction de terminal (31) correspondant audit premier dispositif de terminal de communication (2A) sont conservables par le au moins un deuxième dispositif de terminal de communication cible de ladite pluralité de dispositifs de terminaux de communication associés au premier dispositif de terminal de communication (2B, 2C).

2. Serveur de gestion de fonction de terminal (3A) selon la revendication 1, dans lequel le moyen de détermination de traitement (33) est adapté pour spécifier le au moins un deuxième dispositif de terminal de communication cible de ladite pluralité de dispositifs de terminaux de communication (2B, 2C) sur la base d'informations d'identification acquises auprès de moyens de stockage d'informations de groupe (41A) stockant les informations d'identification du au moins un deuxième dispositif de terminal de communication cible de ladite pluralité de dispositifs de terminaux de communication associés au premier dispositif de communication de terminal (2B, 2C), et émet les informations de modification de fonction vers le au moins un deuxième dispositif de terminal de communication cible de ladite pluralité de dispositifs de terminaux de communication associés au premier dispositif de terminal de communication (2B, 2C) ainsi spécifié.

3. Serveur de gestion de fonction de terminal (3A) selon la revendication 1, dans lequel les informations de rétention de fonction de communication contiennent des informations d'identification du au moins un deuxième dispositif de terminal de communication cible de ladite pluralité de dispositifs de terminaux de communication (2B, 2C) associés au premier dispositif de terminal de communication ; et
dans lequel le moyen de détermination de traitement (33) est adapté pour spécifier le au moins un deuxième dispositif de terminal de communication cible de ladite pluralité de dispositifs de terminaux de communication (2B, 2C), sur la base des informations d'identification contenues dans les informations de rétention de fonction de communication, et est adapté pour émettre les informations de modification de fonction vers le au moins un deuxième dispositif de terminal de communication cible de ladite pluralité de dispositifs de terminaux de communication associés au premier dispositif de terminal de communication (2B, 2C) ainsi spécifié.

4. Serveur de gestion de fonction de terminal (3A) selon l'une quelconque des revendications 1 à 3, dans lequel, lorsque les fonctions de communication stockées dans le moyen de stockage de fonction de terminal (31) sont modifiées en ajoutant une nouvelle fonction de communication en correspondance avec le premier dispositif de terminal de communication (2A), le moyen de détermination de traitement (33) est adapté pour déterminer si le au moins un deuxième dispositif de terminal de communication cible de ladite pluralité de dispositifs de terminaux de communication (2B, 2C) associés au premier dispositif de terminal de communication, conserve la nouvelle fonction de communication ;
le serveur de gestion de fonction de terminal (3A) comprenant en outre des moyens d'instruction de téléchargement (52) adaptés pour émettre des informations d'instruction de téléchargement pour exécuter un téléchargement de la nouvelle fonction de communication, vers le au moins un deuxième dispositif de terminal de communication cible de ladite pluralité de dispositifs de terminaux de communication associés au premier dispositif de terminal de communication (2B, 2C) déterminé comme ne conservant pas la nouvelle fonction de communication, par le moyen de détermination de traitement (33).

5. Serveur de gestion de fonction de terminal (3A) selon l'une quelconque des revendications 1 à 3, dans lequel le moyen de stockage de fonction de terminal (31) est en outre adapté pour stocker une fonction de communication que le dispositif de terminal de communication (2A) peut conserver ; et
dans lequel, lorsque les fonctions de communication stockées dans le moyen de stockage de fonction de terminal (31) sont modifiées en ajoutant une nouvelle fonction de communication en correspondance avec le premier dispositif de terminal de communication (2A), le moyen de détermination de traitement (33) est adapté pour déterminer si le au moins un deuxième dispositif de terminal de communication cible de ladite pluralité de dispositifs de terminaux de communication associés au premier dispositif de terminal de communication (2B, 2C), peut conserver la nouvelle fonction de communication ;
le serveur de gestion de fonction de terminal (3A) comprenant en outre des moyens d'instruction de téléchargement (52) adaptés pour émettre des informations d'instruction de téléchargement pour exécuter un téléchargement de la nouvelle fonction de communication, vers le au moins un deuxième dispositif de terminal de communication cible de ladite pluralité de dispositifs de terminaux de communication associés au premier dispositif de terminal de communication (2B, 2C) déterminé comme pouvant conserver la nouvelle fonction de communication, par le moyen de détermination de traitement (33).

6. Système de communication comprenant un serveur de gestion de fonction de terminal (3A) qui est adapté pour stocker une fonction de communication conservée par un dispositif de terminal de communication (2A), parmi une pluralité de fonctions de communication (2A, 2B, 2C) afin de permettre une pluralité de communications de modes de communication différents ;
dans lequel ledit serveur de gestion de fonction de terminal comprend :
un moyen de stockage de fonction de terminal (31) adapté pour stocker des informations d'état de terminal indiquant une ou plusieurs fonctions de communication conservée(s) et conservable(s) par chacun des dispositifs de terminal de communication d'une pluralité de dispositifs de terminaux de communication (2A, 2B, 2C), en correspondance avec chaque dispositif de terminal de communication ; et
un moyen de détermination de traitement (33) adapté pour recevoir des informations de rétention de fonction de communication émises par un dispositif de terminal de communication (2A, 2B, 2C) et adapté pour modifier les fonctions de communication stockées dans le moyen de stockage de fonction de terminal (31), sur la base des informations de rétention de fonction de communication ;
dans lequel le moyen de détermination de traitement (33), lorsqu'il modifie les fonctions de communication stockées en correspondance avec un premier dispositif de terminal de communication (2A) parmi la pluralité de dispositifs de terminaux de communication (2A, 2B, 2C) dans le moyen de stockage de fonction de terminal (31), est adapté pour émettre des informations de modification de fonction indiquant la modification des fonctions de communication dudit premier dispositif de terminal de communication (2A), vers au moins un deuxième dispositif de terminal de communication cible (2B, 2C) d'une pluralité de dispositifs de terminaux de communication associés au premier dispositif de terminal de communication, et ladite modification de fonction comprenant en outre des informations d'état de terminal indiquant si les fonctions de communication modifiées stockées dans le moyen de stockage de fonction de terminal (31) correspondant audit premier dispositif de terminal de communication, sont conservable(s) par le au moins un deuxième dispositif de terminal de communication cible de ladite pluralité de dispositifs de terminaux de communication associés au premier dispositif de terminal de communication (2B, 2C).

7. Système de communication selon la revendication 6, comprenant en outre :
un serveur de gestion d'informations de groupe (4A) présentant des moyens de stockage d'informations de groupe (41A) adaptés pour stocker des informations d'identification du au moins un deuxième dispositif de terminal de communication cible de ladite pluralité de dispositifs de terminaux de communication associés au premier dispositif de terminal de communication (2B, 2C), et des moyens d'émission/réception d'informations de groupe (43) destinés à émettre les informations d'identification du au moins un deuxième dispositif de terminal de communication cible de ladite pluralité de dispositifs de terminaux de communication associés au premier dispositif de terminal de communication (2B, 2C) vers le serveur de gestion de fonction de terminal (3A), en accord avec une demande en provenance du serveur de gestion de fonction de terminal (3A) ;
dans lequel le moyen de détermination de traitement (33) du serveur de gestion de fonction de terminal (3A) est adapté pour spécifier le au moins un deuxième dispositif de terminal de communication cible de ladite pluralité de dispositifs de terminaux de communication associés au premier dispositif de terminal de communication (2B, 2C), sur la base des informations d'identification reçues en provenance du serveur de gestion d'informations de groupe (4A), et est adapté pour émettre les informations de modification de fonction vers le au moins un deuxième dispositif de terminal de communication cible de ladite pluralité de dispositifs de terminaux de communication associés au premier dispositif de terminal de communication (2B, 2C) ainsi spécifié.

8. Procédé de communication mis en oeuvre dans un système de communication comprenant un serveur de gestion de fonction de terminal (3A) qui est adapté pour stocker une fonction de communication conservée par un dispositif de terminal de communication, parmi une pluralité de fonctions de communication afin de permettre une pluralité de communications de modes de communication différents ;
le procédé de communication comprenant :
une étape de stockage de fonction de terminal consistant à stocker des informations d'état de terminal indiquant une ou plusieurs fonctions de communication conservée(s) et conservable(s) par chacun des dispositifs de terminal de communication d'une pluralité de dispositifs de terminaux de communication (2A, 2B, 2C), en correspondance avec chaque dispositif de terminal de communication (2A, 2B, 2C) ;
une étape de modification de fonction de terminal consistant à recevoir des informations de rétention de fonction de communication émises à partir d'un premier dispositif de terminal de communication (2A) parmi la pluralité de dispositifs de terminaux de communication (2A, 2B, 2C), et à modifier les fonctions de communication stockées en correspondance avec le premier dispositif de terminal de communication (2A) dans un moyen de stockage de fonction de terminal (31), sur la base des informations de rétention de fonction de communication ; et
une étape de notification de modification de fonction consistant à émettre des informations de modification de fonction indiquant la modification des fonctions de communication du premier dispositif de terminal de communication (2A) vers au moins un deuxième dispositif de terminal de communication cible (2B, 2C) d'une pluralité de dispositifs de terminaux de communication associés au premier dispositif de terminal de communication et lesdites informations de modification de fonction comprenant en outre des informations d'état de terminal indiquant si les fonctions de communication modifiées stockées dans le moyen de stockage de fonction de terminal (31) correspondant au premier dispositif de terminal de communication (2A) sont conservable(s) par le au moins un deuxième dispositif de terminal de communication cible de ladite pluralité de dispositifs de terminaux de communication associés au premier dispositif de terminal de communication (2B, 2C).
